# EUROPÄISCHE PATENTSCHRIFT

(11) **EP 3 899 353 B1**
(45) Veröffentlichungstag und Bekanntmachung des Hinweises auf die Patenterteilung: **11.10.2023**
(21) Anmeldenummer: 18836251.1
(22) Anmeldetag: 21.12.2018
(51) Int. Cl.: F21S 41/143, G02B 19/00, F21S 43/40, F21S 43/31, F21S 43/15, F21S 43/14, F21S 41/32, F21S 41/24, F21S 41/151, B60Q 1/26, F21S 41/663, F21S 43/239, F21S 43/243, F21S 43/249

(54) **BELEUCHTUNGSVORRICHTUNG FÜR EINEN KRAFTFAHRZEUGSCHEINWERFER UND KRAFTFAHRZEUGSCHEINWERFER**
ILLUMINATION DEVICE FOR A MOTOR VEHICLE HEADLIGHT, AND MOTOR VEHICLE HEADLIGHT
DISPOSITIF D'ÉCLAIRAGE POUR PROJECTEUR DE VÉHICULE AUTOMOBILE ET PROJECTEUR DE VÉHICULE AUTOMOBILE

(43) Veröffentlichungstag der Anmeldung: 27.10.2021
(73) Patentinhaber: ZKW Group GmbH, 3250 Wieselburg (AT)
(72) Erfinder: STROHMÜLLER, Alexander, 3370 Ybbs (AT)
(74) Vertreter: Patentanwaltskanzlei Matschnig & Forsthuber OG
(86) Internationale Anmeldenummer: PCT/EP2018/086586
(87) Internationale Veröffentlichungsnummer: WO 2020/126031

(56) Entgegenhaltungen:
- WO-A1-2017/067915
- DE-A1-102015 115 969
- US-A1- 2008 310 159

## Beschreibung

Die Erfindung eine Beleuchtungsvorrichtung für einen Kraftfahrzeugscheinwerfer und/oder für eine Heckleuchte eines Kraftfahrzeuges und/oder für eine Signalleuchte für einen Kraftfahrzeug zum Erzeugen von zumindest zwei, insbesondere genau zwei Lichtverteilungen, oder zur Erzeugung von zumindest zwei, insbesondere genau zwei unterschiedlichen Lichtfunktionen, wobei die Beleuchtungsvorrichtung einen Optikkörper sowie zwei Lichtquellen, eine erste Lichtquelle und eine zweite Lichtquelle, insbesondere LED-Lichtquellen umfasst, wobei jede der Lichtquellen unabhängig von der oder den anderen Lichtquellen ansteuerbar ist, wobei der Optikkörper aus einem optisch transparenten Material gebildet ist, und wobei der Optikkörper einen Lichteinkoppelbereich und eine Lichtaustrittsfläche aufweist, und wobei Licht der Lichtquellen, welches über den Lichteinkoppelbereich in den Optikkörper eingespeist wird, zumindest teilweise über die Lichtaustrittsfläche austritt, wobei der Lichteinkoppelbereich aus einer zentralen Lichteinkoppelfläche und einer seitlichen Seiteneinkoppelfläche gebildet ist, wobei die zentrale Lichteinkoppelfläche den Lichtquellen gegenüberliegt, und die Seiteneinkoppelfläche an die zentrale Lichteinkoppelfläche derart anschließt, dass eine Vertiefung in dem Optikkörper gebildet ist, in oder gegenüber welcher die Lichtquellen angeordnet sind und in welche die Lichtquellen ihr Licht abstrahlen, wobei die beiden Lichtquellen auf einer Gerade liegen, welche in einer Vertikalrichtung verläuft, welche parallel zu einer Vertikalachse verläuft, und wobei in Vertikalrichtung gesehen die erste Lichtquelle oberhalb der zweiten Lichtquelle liegt, und wobei der Lichteinkoppelbereich zwei Brennpunkt aufweist, wobei eine der Lichtquellen in einem der Brennpunkt und die andere Lichtquelle in dem anderen Brennpunkt angeordnet ist.

Weiters betrifft die Erfindung eine solche Beleuchtungsvorrichtung, wobei die Beleuchtungsvorrichtung als Kraftfahrzeugscheinwerfer oder Heckleuchte eines Kraftfahrzeuges oder Signalleuchte für ein Kraftfahrzeug ausgebildet ist.

Außerdem betrifft die Erfindung ein Beleuchtungssystem, welches als Kraftfahrzeugscheinwerfer oder Heckleuchte eines Kraftfahrzeuges oder Signalleuchte für ein Kraftfahrzeug ausgebildet ist.

Außerdem betrifft die Erfindung eine Vorrichtung umfassend zumindest eine Beleuchtungsvorrichtung und/oder umfassend zumindest ein Beleuchtungssystem, wobei die Vorrichtung ein Kraftfahrzeugscheinwerfer oder eine Heckleuchte für ein Kraftfahrzeug oder eine Signalleuchte für ein Kraftfahrzeug ist.

Vorstehend erwähnte Optikkörper sind in Form von sogenannten Kollimatoren bekannt. Ein solcher Optikkörper bzw. Kollimator weist reflektierende und refraktive, also Licht brechende Flächen auf. Häufig werden solche Optikkörper bzw. Kollimatoren auch als TIR-Linsen (TIR: "*total internal reflection")* bzw. TIR-Optikkörper bezeichnet. Häufig wird neben dem Begriff TIR-Optik(körper) für einen solchen Optikkörper (und die im Folgenden beschriebenen Optikkörper) auch der Begriff CPC-Optik(körper) ("Compound-Parabolic-Concentrator") verwendet oder es handelt sich bei der TIR-Optik um eine CPC-Optik, da häufig neben reflektierenden, insbesondere totalreflektierenden, den Optikkörper begrenzenden Außenflächen der Zentrumsbereich, d.h. der Lichteinkoppelbereich eine klassische, Licht brechende Linsengrenzfläche darstellt.

In der Entwicklung von Fahrzeugscheinwerfern spielt das Design eine immer stärkere Rolle. Durch den zunehmend beschränkten Bauraum sind kompaktere Optiken zur Erfüllung der gesetzlich geforderten Lichtwerte notwendig. Insbesondere wenn mehrere Lichtquellen, bei welchen es sich typischer Weise um LED's handelt, zur Erreichung der gesetzlichen Anforderungen erforderlich sind, stoßen Lösungen mit konventionellen Optikkörpern wie oben beschrieben schnell an ihre Grenzen.

Beispielsweise ist es aus dem Stand der Technik bekannt, dass zur Realisierung von zwei (oder mehr) unterschiedlichen Lichtfunktionen bzw. Lichtverteilungen (bzw. Teillichtverteilungen) zwei oder mehr Optikkörper verwendet werden, wobei jeder Optikkörper über eine ihm eigens zugeordnete Lichtquelle verfügt. Es ist augenscheinlich, dass dies zu einem erhöhten Bauraumbedarf führt, außerdem ergibt sich häufig in Folge einer zwangsläufig notwendigen separierten Anordnung der Optikkörper für den Betrachter von ein inhomogener Leuchteindruck.

US2008/310159 A1 und DE102015115969 A1 zeigen Anordnungen, bei welchen im Lichteinkoppelbereich des Optikkörpers zwei oder mehr Lichtquellen angeordnet werden. Diese Lösungen sind allerdings häufig in optischer Hinsicht nicht optimal, da die Optikkörper lediglich für eine Lichtquelle optimiert sind.

Es ist eine Aufgabe, eine Lösung für diese Probleme anzugeben.

Diese Aufgabe wird mit einer eingangs beschriebenen Beleuchtungsvorrichtung dadurch gelöst, dass erfindungsgemäß der die Seiteneinkoppelfläche des Lichteinkoppelbereiches (10) derart ausgestaltet ist, dass
- in einem Bereich, der in Vertikalrichtung zumindest teilweise oder vollständig oberhalb einer ersten Horizontalebene liegt, in welcher die erste Lichtquelle angeordnet ist, die Seitenbegrenzungsfläche einen ersten, gekrümmt ausgebildeten Seitenbegrenzungsflächenabschnitt aufweist, und
- in einem Bereich, der in Vertikalrichtung zumindest teilweise oder vollständig unterhalb einer zweiten Horizontalebene liegt, in welcher die zweite Lichtquelle angeordnet ist, die Seitenbegrenzungsfläche einen zweiten, gekrümmt ausgebildeten Seitenbegrenzungsflächenabschnitt aufweist,
- wobei die Horizontalebenen Ebenen sind, die parallel zu einer Ebene verlaufen, auf welche die Vertikalachse orthogonal steht, und welche die optische Achse enthält, und wobei
- die beiden Seitenbegrenzungsflächenabschnitt über Seitenbegrenzungsflächen-Verbindungsabschnitte miteinander verbunden sind,
- und die zentrale Lichteinkoppelfläche wie folgt ausgebildet ist:
   o ausgehend von jedem Seitenbegrenzungsflächen-Verbindungsabschnitt erstreckt sich jeweils eine Zentraleinkoppelfläche in Richtung des anderen Seitenbegrenzungsflächen-Verbindungsabschnittes, wobei die Zentraleinkoppelflächen aufeinander zulaufen und in eine gemeinsame Zentralkante münden;
   o oberhalb und unterhalb der Zentraleinkoppelflächen erstrecken sich zwei Verbindungseinkoppelflächen, welche die Zentraleinkoppelflächen mit den Seitenbegrenzungsflächenabschnitten verbinden,
   o und wobei die Zentraleinkoppelflächen in Horizontalschnittebenen, das sind Schnittebenen, die parallel zu einer Ebene verlaufen, auf welche die Vertikalachse orthogonal steht, und welche die optische Achse enthält, konkav gekrümmt sind, sodass sich konkave Zentraleinkoppelflächen-Konturen ergeben.

Durch die erfindungsgemäße Ausgestaltung des Optikkörpers wird es möglich, für jede der Lichtquellen einen Brennpunkt im Lichteinkoppelbereich derart zu realisieren, dass von jeder der jeweils in einem Brennpunkt angeordneten Lichtquellen stammendes Licht - unter der Annahme von punktförmigen Lichtquellen - im Fernfeld in einen Punkt, beispielsweise (bei entsprechender Ausrichtung) in den sogenannten HV-Punkt, der sich in bekannter Weise als Schnittpunkt der H-H-Linie und der V-V-Line ergibt, abstrahlt wird. Die jeweils real von jeder Lichtquelle gebildete Lichtverteilung ergibt sich in Folge der real gegebenen Ausdehnung der jeweiligen Lichtquelle, mit einem Maximum der Beleuchtungsstärke in dem gemeinsamen Punkt, z.B. im Punkt HV.

Bei der erfindungsgemäßen Lösung können somit zwei räumlich getrennte Lichtquellen, insbesondere LED-Lichtquellen, Licht in den Optikkörper einspeisen und das Licht jeder der Lichtquellen beleuchtet im Fernfeld, z.B. auf einem Messschirm, etwa in 25 Metern Entfernung vor der Beleuchtungsvorrichtung, im Wesentlichen denselben Ausleuchtungsbereich, oder die Ausleuchtungsbereiche der beiden Lichtquellen sind ident.

Unter "im Wesentlichen denselben Ausleuchtungsbereich" wird verstanden, dass der Maximum-Bereich, d.h. der Bereich der maximalen Beleuchtungsstärke der unterschiedlichen Lichtverteilungen an derselben Stellen bzw. demselben Bereich im Lichtbild liegen. Die Formen der Lichtverteilungen selbst sind vorzugsweise ident oder sehr ähnlich, können aber voneinander z.B. in der Farberscheinung abweichen.

Die Verbindungseinkoppelflächen sind derart geformt, dass sie jeweils einen Brennpunkt für eine Lichtquelle bilden, sodass Licht, das von den Lichtquellen kommend in den Optikkörper eintritt, in den gemeinsamen Punkt, z.B. den Punkt HV gebrochen wird. Die wie beschrieben konkav gekrümmten Zentraleinkoppelflächen, die räumlich gesehen beispielsweise Zylinderlinsen bilden, sind derart geformt, dass für jede der in ihrem Brennpunkt sitzenden Lichtquellen deren Lichtstrahlen, die auf die Zentraleinkoppelflächen abgestrahlt werden, beim Eintritt in den Optikkörper in den Punkt HV gebrochen werden.

Die an die zentrale Lichteinkoppelfläche angrenzenden Seitenbegrenzungsflächen brechen Lichtstrahlen zu reflektierenden, insbesondere totalreflektierenden Außenflächen des Optikkörpers und werden von diesen vorzugsweise ebenfalls in den gemeinsamen Punkt, z.B. den Punkt HV gerichtet.

Im Folgenden sollen vorerst relevante verwendete Begriffe definiert werden. Die optische Achse des Optikkörpers bzw. der Projektionsoptikvorrichtung wird mit X bezeichnet, dies ist in etwa die Hauptabstrahlrichtung des Lichtes aus dem Optikkörper. Mit "Z" wird eine vertikale Achse definiert, die orthogonal auf die optische Achse X steht. Quer zu der optischen Achse X verläuft eine weitere Achse "Y", welche orthogonal zu den beiden anderen Achsen, X, Z steht.

Die Achsen X, Z spannen eine Vertikalebene auf, die Achsen X, Y spannen eine Horizontalebene auf.

Wenn von der Richtung von Lichtstrahlen in "vertikaler Richtung" die Rede ist, ist die Projektion dieser Lichtstrahlen in die X, Z-Ebene gemeint. Wenn von der Richtung von Lichtstrahlen in "horizontaler Richtung" die Rede ist, ist die Projektion dieser Lichtstrahlen in die X, Y- Ebene gemeint.

Generell werden die Begriffe "horizontal" und "vertikal" für eine vereinfachte Darstellung der Zusammenhänge verwendet; bei einer typischen Einbausituation in einem Kraftfahrzeug können die beschriebenen Achsen und Ebenen tatsächlich horizontal und vertikal liegen. Es kann aber auch vorgesehen sein, dass die Beleuchtungsvorrichtung oder bei mehreren Beleuchtungsvorrichtungen eine oder mehrere, insbesondere alle Beleuchtungsvorrichtungen, gegenüber dieser Lage verdreht sind, beispielsweise kann die X-Achse gegen eine Horizontalebene des Bezugssystems Erde nach oben oder unten geneigt sein, oder das beschriebene X, Y, Z-Achssystem kann allgemein verdreht sein. Für einen Fachmann versteht sich somit, dass die verwendeten Begriffe einer vereinfachten Beschreibung dienen und im Bezugssystem Erde nicht zwingend derart ausgerichtet sein müssen. Die räumliche Ausrichtung einer allgemeinen Vertikalrichtung R, die parallel zur Achse Z verläuft, folgt jeweils dieser Drehung.

"Erste Vertikalschnittebenen" sind Schnittebenen, die parallel zu einer Ebene verlaufen, auf welche die optische Achse X orthogonal steht, und welche die Vertikalachse Z enthält (diese Ebene wird also von den Achsen Y, Z aufgespannt).

"Zweite Vertikalschnittebenen" sind Schnittebenen, die parallel zu einer Ebene verlaufen, welche von der optischen Achse X und der Vertikalachse Z aufgespannt wird. "Horizontalschnittebenen" sind Schnittebenen, die parallel zu einer Ebene verlaufen, auf welche die Vertikalachse Z orthogonal steht, und welche die optische Achse X enthält (diese Ebene wird also von den Achsen X,Y aufgespannt).

Zweckmäßige Weiterbildungen der erfindungsgemäßen Beleuchtungsvorrichtung sind Gegenstand der Unteransprüche.

Insbesondere ist vorgesehen, dass die Seitenbegrenzungsflächen-Verbindungsabschnitte in ersten Vertikalschnittebenen, das sind Schnittebenen, die parallel zu einer Ebene verlaufen, auf welche die optische Achse orthogonal steht, und welche die Vertikalachse enthält, eine geradlinige Verbindungsabschnitt-Kontur aufweisen.

Außerdem kann vorgesehen sein, dass die Seitenbegrenzungsflächen-Verbindungsabschnitte in Horizontalschnittebenen, das sind Schnittebenen, die parallel zu einer Ebene verlaufen, auf welche die Vertikalachse orthogonal steht, und welche die optische Achse enthält, eine konvexe Verbindungsabschnitt-Kontur aufweisen.

Weiters kann vorgesehen sein, dass die Seitenbegrenzungsflächenabschnitte in ersten Vertikalschnittebenen, das sind Schnittebenen, die parallel zu einer Ebene verlaufen, auf welche die optische Achse orthogonal steht, und welche die Vertikalachse enthält, eine konkav gekrümmte Seitenbegrenzungsflächenabschnitt-Kontur aufweisen.

Bevorzugt sind die Seitenbegrenzungsflächenabschnitte konvex gekrümmt sind. In vertikalen Schnitten sind die Seitenbegrenzungsflächenabschnitte (bzw. die sich in diesen Schnitten ergebende Kontur) somit bevorzugt konkav, die Fläche selbst aber ist im Raum bevorzugt konvex.

Beispielsweise sind die unterschiedlichen beschriebenen Flächen glatt ausgebildet.

Weiters ist bevorzugt vorgesehen, dass die Zentraleinkoppelflächen in vertikaler Richtung gerade ausgebildet sind, sodass sich in zweiten Vertikalschnittebenen, das sind Schnittebenen, die parallel zu einer Ebene verlaufen, welche von der optischen Achse und der Vertikalachse aufgespannt wird, gerade Zentraleinkoppelflächen-Konturen ergeben, welche vorzugsweise parallel zu der gemeinsamen Zentralkante verlaufen.

Die Zentraleinkoppelflächen sind entsprechend als Zylinderlinsen ausgebildet, mit der Höhe des Zylinders parallel zu der Vertikalachse, somit mit dem einer Zylinderlinse entsprechenden Brechungsverhalten.

Außerdem ist bevorzugt vorgesehen sein, dass jede der Verbindungseinkoppelflächen durch jeweils eine Verbindungskante in zwei Unter-Verbindungseinkoppelflächen unterteilt ist.

Insbesondere verlaufen dabei die Verbindungskanten in vertikaler Richtung gesehen in dieselbe Richtung wie die Zentralkante.

Beispielsweise sind die Verbindungskanten in zweiten Vertikalschnittebenen konkav gekrümmt ausgebildet.

Dabei kann jede der Unter-Verbindungseinkoppelflächen konkav gekrümmt ausgebildet sein.

Besonders bevorzugt sind der Lichteinkoppelbereich und/oder der Optikkörper symmetrisch bezüglich einer Ebene, welche von der optischen Achse und einer Horizontalachse aufgespannt ist, und/oder bezüglich der Vertikalschnittebene, welche von der optischen Achse und der Vertikalachse aufgespannt wird, ist.

Dabei verläuft insbesondere die optische Achse des Optikkörpers symmetrisch zwischen den Lichtquellen.

Auf diese Weise können zwei möglichst idente Ausleuchtungsbereiche oder Lichtverteilungen mit den beiden Lichtquellen erzeugt werden.

Weiters kann vorgesehen sein, dass die Zentralkante an eine Verbindungskante in einem Anschlusspunkt anschließt, und wobei vorzugsweise jeweils ein Brennpunkt auf einer Brennpunktgeraden liegt, wobei eine Brennpunktgerade durch einen Anschlusspunkt und parallel zu der optischen Achse verläuft.

Es kann vorgesehen sein, dass der erste Brennpunkt zu seinem Anschlusspunkt denselben Abstand aufweist wie der zweite Brennpunkt einen Abstand zu seinem Anschlusspunkt hat.

Beispielsweise ist der Lichteinkoppelbereich über eine Mantelfläche mit der Lichtaustrittsfläche verbunden ist.

Dabei ist mit Vorteil die Mantelfläche in Bereichen anschließend an die Seitenbegrenzungsflächen-Verbindungsabschnitte in vertikaler Richtung gerade ausgebildet ist.

Räumlich gesehen sind diese Seitenbegrenzungsflächen und die Mantelfläche generell nach Außen gekrümmt. Licht, das sich im Optikkörper fortpflanzt und auf diese Mantelfläche auftrifft, wird vorzugsweise reflektiert, insbesondere totalreflektiert, und vorzugsweise in den Punkt HV gerichtet. Das so entstehende Lichtbündel, insbesondere Parallellichtstrahlbündel breitet somit vorzugsweise wie jene Lichtstrahlen, die im zentralen Bereich des Lichteinkoppelbereiches gebrochen werden, aus.

Insbesondere ist vorgesehen, dass die Lichtquellen jeweils zumindest eine Leuchtdiode umfassen oder aus einer Leuchtdiode bestehen.

Vorzugsweise weist jede Lichtquelle eine Hauptabstrahlrichtung auf, und insbesondere ist vorgesehen, dass die Hauptabstrahlrichtungen der Lichtquellen parallel zu der optischen Achse des Optikkörpers verlaufen. Beispielsweise ist die Hauptabstrahlrichtung einer Lichtquelle, insbesondere einer LED, parallel zur und insbesondere zusammenfallend mit der jeweiligen Brennpunktgeraden.

Weiters wird die eingangs gestellte Aufgabe mit einem Beleuchtungssystem gelöst, welches eine oben beschriebene Beleuchtungsvorrichtung sowie einen Lichtleitkörper umfasst, in welchen Licht aus dem Optikkörper der Beleuchtungsvorrichtung eingekoppelt werden kann, und welches aus dem Lichtleitkörper über eine Lichtleitoptikaustrittsfläche zur Bildung von einer, zwei oder mehreren Lichtverteilungen austreten kann.

Vorzugsweise ist vorgesehen, dass die Lichtleitoptikaustrittsfläche Zylinderlinsen aufweist, welche vorzugsweise in Richtung einer Vertikalachse des Lichtleitkörpers verlaufen.

Es kann vorgesehen sein, dass eine optische Achse des Lichtleitkörpers und die optische Achse des Optikkörpers der Beleuchtungsvorrichtung nicht zusammenfallen, und insbesondere zueinander um einen Winkel verdreht sind.

Außerdem kann vorgesehen sein, dass betrachtet in einer Projektion in eine Vertikalebene die Vertikalachse des Optikkörpers und die Vertikalachse des Lichtleitkörpers parallel oder nicht parallel zueinander verlaufen.

Außerdem betrifft die Erfindung einen Kraftfahrzeugscheinwerfer, welcher zumindest eine oben beschriebene Beleuchtungsvorrichtung und/oder zumindest ein vorstehend beschriebenes Beleuchtungssystem umfasst.

Mit der Erfindung können mit einem Optikkörper unter Verwendung von zwei Lichtquellen zwei Lichtverteilungen erzeugt werden, die im Wesentlichen identisch oder im Wesentlichen identische Ausleuchtungsbereiche aufweisen. Ob dabei die Lichtverteilungen oder lediglich die Ausleuchtungsbereiche im Wesentlichen identisch sind, hängt auch von den verwendeten Lichtquellen ab.

Bei typengleichen Leuchtdioden mit unterschiedlicher Farbe (z.B. weiß und gelb) etwa ist die Abstrahlcharakteristik der Leuchtdioden ident, sodass sich mit dem erfindungsgemäßen Optikkörper im Wesentlichen idente Ausleuchtungsbereiche ergeben und die Messwerte (z.B. Beleuchtungsstärke) im Wesentlichen ident sind. Die Lichtverteilungen sind somit ident, allerdings unterscheiden sich die generierten Lichtbilder hinsichtlich der Farbe.

Bei typengleichen Leuchtdioden identischer Farbe werden im Wesentlichen identische Lichtverteilungen (gleiche Ausleuchtungsbereich, gleiche Messwerte, gleiche Farbe) erzeugt, die auch hinsichtlich ihrer Farbe übereinstimmen, sodass auch die Lichtbilder identisch sind.

Bei Verwendung von zwei unterschiedlich starken Leuchtdioden sind die Ausleuchtungsbereiche im Wesentlich identisch, allerdings skalieren die Messwerte der Lichtverteilungen mit der Stärke der LEDs, sodass hier dahingehend die Lichtverteilungen nicht ident sind.

Im Folgenden ist die Erfindung an Hand der Zeichnung beispielhaft näher erörtert. In dieser zeigt
Fig. 1 eine Beleuchtungsvorrichtung mit einem Optikkörper, insbesondere Kollimator nach dem Stand der Technik mit zwei Lichtquellen,
Fig. 2 zwei mit dem Optikkörper aus Figur 1 erzeugte Lichtverteilungen,
Fig. 3 eine erfindungsgemäße Beleuchtungsvorrichtung in einer perspektivischen Ansicht von Hinten,
Fig. 4 die Beleuchtungsvorrichtung aus Figur 3 mit einer "abgenommenen" Lichtquelle zur verbesserten Einsicht auf den Lichteinkoppelbereich,
Fig. 5 die Beleuchtungsvorrichtung aus Figur 3 ohne Lichtquellen in einer detaillierten Darstellung,
Fig. 6 nochmals die Beleuchtungsvorrichtung betrachtet aus einer anderen Richtung,
Fig. 7 eine Rückansicht der Beleuchtungsvorrichtung bzw. eine Projektion verschiedener erster Vertikalschnittebenen in eine gemeinsame erste Vertikalebene,
Fig. 8 einen Schnitt entlang der Linie A - A aus Figur 7,
Fig. 9 einen Schnitt entlang der Linie B₀ - B₀ aus Figur 7,
Fig. 10 einen Schnitt entlang der Linie B₁ - B₁ aus Figur 7,
Fig. 11 schematische eine mit einer erfindungsgemäßen Beleuchtungsvorrichtung erzeugte erste Lichtverteilung einer ersten Lichtquelle,
Fig. 12 schematische eine mit einer erfindungsgemäßen Beleuchtungsvorrichtung erzeugte zweite Lichtverteilung einer zweiten Lichtquelle,
Fig. 13 schematisch eine Überlagerung der ersten und zweiten Lichtverteilung aus den Figuren 11 und 12,
Fig. 14 schematisch eine Überlagerung der ersten und zweiten Lichtverteilung aus den Figuren 11 und 12 nach Durchtritt durch eine Lichtaustrittsfläche mit optischer Struktur z.B. in Form von Zylinderlinsen,
Fig. 15 ein Beleuchtungssystem mit einer erfindungsgemäßen Beleuchtungsvorrichtung mit in Lichtaustrittsrichtung vorgeschalteter Lichtleitoptik,
Fig. 16 das Beleuchtungssystem aus Figur 15 in einer anderen perspektivischen Ansicht,
Fig. 17 das Beleuchtungssystem aus Figur 15 und 16 in einer Projektion der Lichtleitoptikaustrittsfläche der Lichtleitoptik und des Optikkörper Beleuchtungsvorrichtung in eine Vertikalebene,

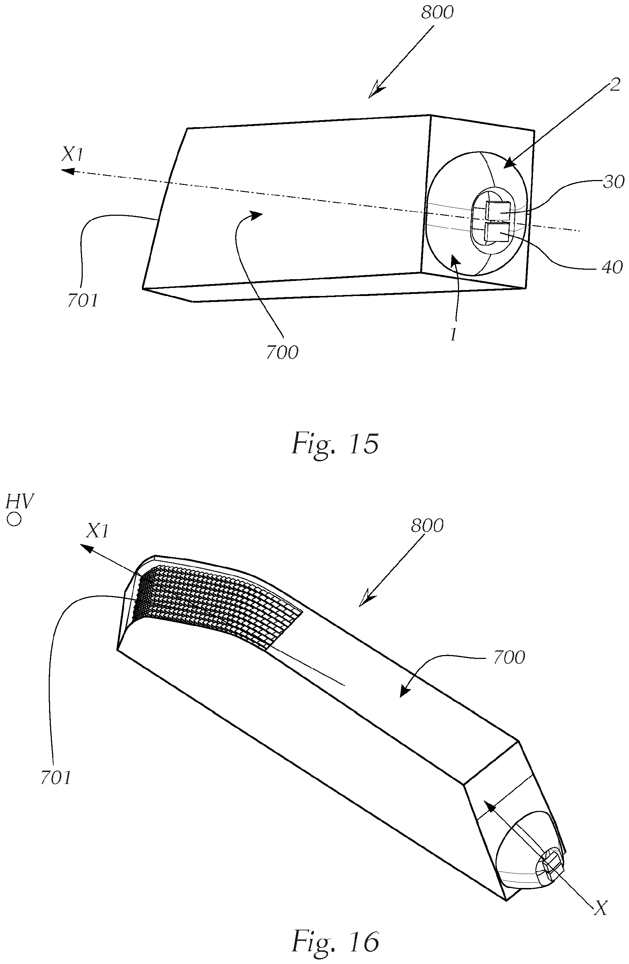

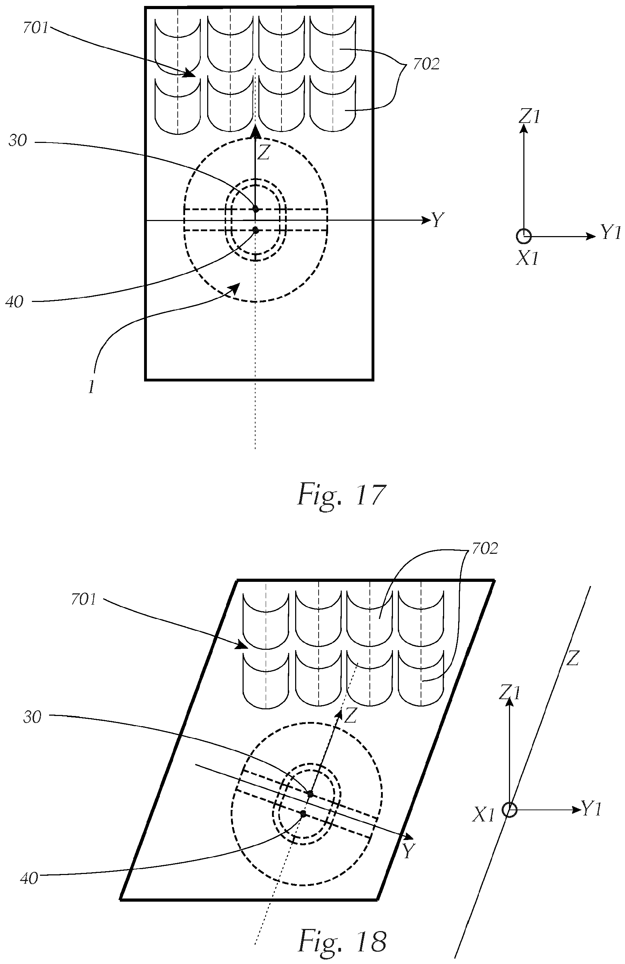

Fig. 17 das Beleuchtungssystem aus Figur 15 und 16 in einer Projektion der Lichtleitoptikaustrittsfläche der Lichtleitoptik und des Optikkörper Beleuchtungsvorrichtung in eine Vertikalebene,
Fig. 18 ein weiteres Beleuchtungssystem in einer Projektion der Lichtleitoptikaustrittsfläche der Lichtleitoptik und des Optikkörper Beleuchtungsvorrichtung in eine Vertikalebene, und

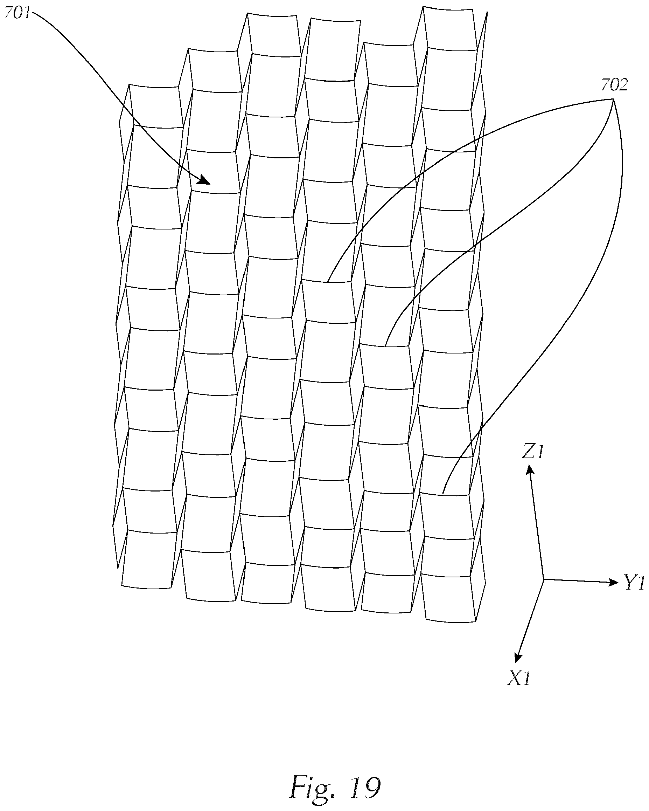

Fig. 19 die Lichtleitoptikaustrittsfläche in einer perspektivischen Darstellung.

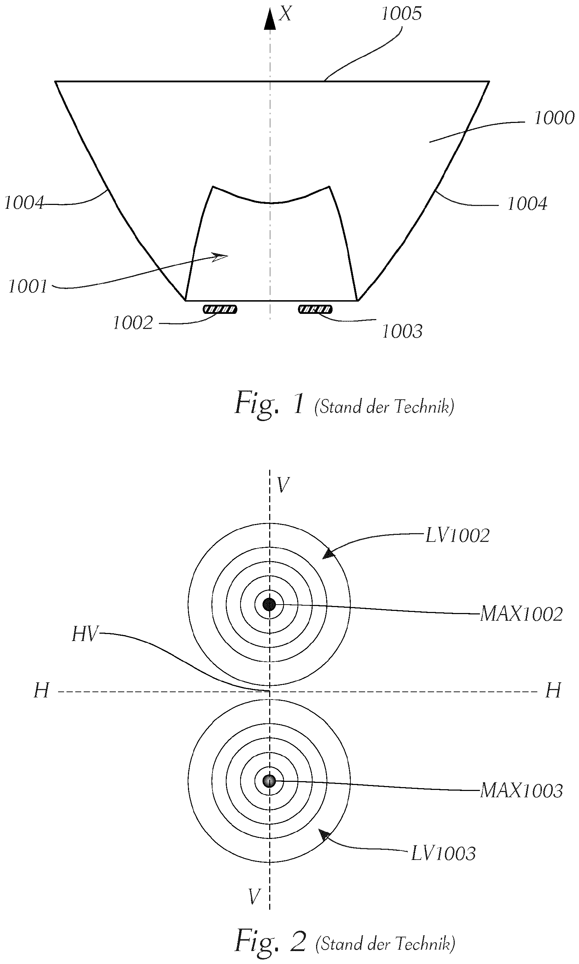

**Figur 1** zeigt einen aus dem Stand der Technik bekannten, um eine optische Achse X rotationssymmetrischen Optikkörper, insbesondere ein Optikkörper 1000. Der Optikkörper 1000 ist ein Vollkörper aus einem optisch transparenten Material. In einem Lichteinkoppelbereich 1001 des Optikkörpers 1000 sitzen zwei LED-Lichtquellen 1002,1003.

Generell bedeutet in dem vorliegenden Text die Formulierung "Lichtquelle/Brennpunkt in einem Lichteinkoppelbereich", dass sich die Lichtquelle/Brennpunkt tatsächlich innerhalb der Vertiefung, die der Lichteinkoppelbereich in dem Optikkörper ausbildet, angeordnet ist, es kann aber auch vorgesehen sein, dass Lichtquelle/Brennpunkt (etwas) außerhalb der Vertiefung liegen, das aus den Lichtquellen austretende Licht.

Das von den Lichtquellen 1002, 1003 ausgestrahlte Licht tritt über den Lichteinkoppelbereich 1001 in den Optikkörper 1000 ein, wird dabei gebrochen, und pflanzt sich in diesem direkt oder nach Reflektion an den insbesondere totalreflektierenden Seitenflächen 1004 des Optikkörpers 1000 fort und tritt über eine Lichtaustrittsfläche 1005 aus.

Ein Brennpunkt des Lichteinkoppelbereiches 1001 liegt bei einem solchen Optikkörper 1000 typischer Weise auf der optischen Achse X, sodass diese beiden Lichtquellen 1002, 1003 sich nicht im Brennpunkt befinden. Entsprechend leuchten, wie dies die **Figur 2** schematisch zeigt, die beiden Lichtquellen 1002, 1003 unterschiedliche Bereiche aus und bilden unterschiedliche Lichtverteilungen LV1002, LV1003, mit nicht zusammenfallenden Bereichen MAX1002, MAX1003 maximaler Beleuchtungsstärke.

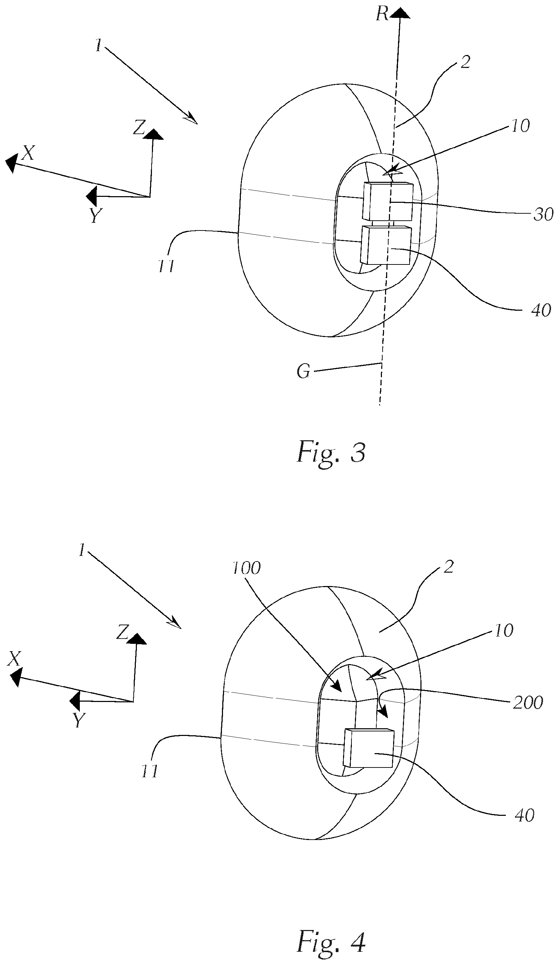

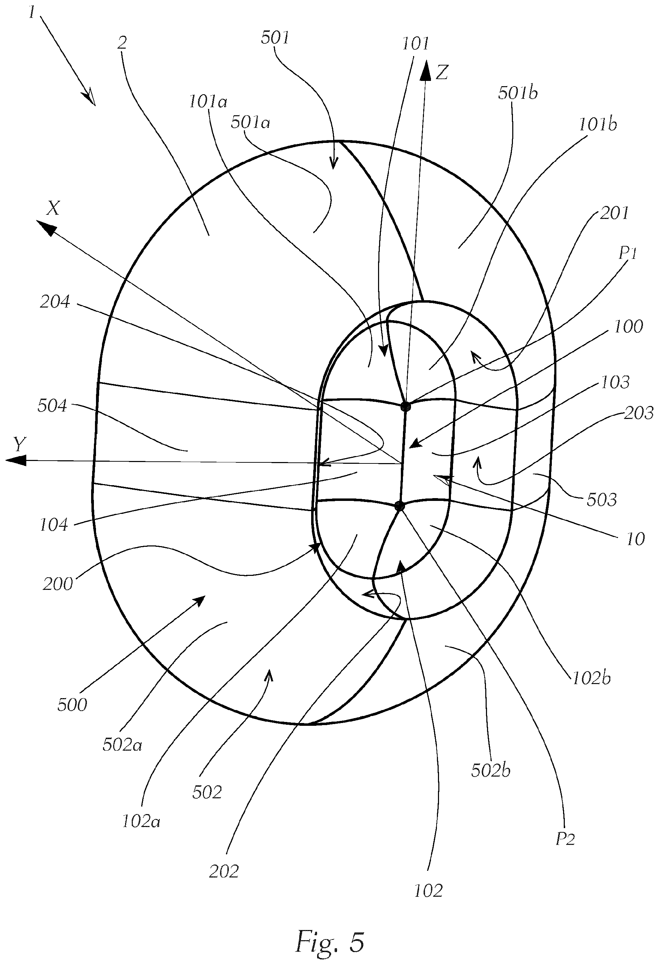

Im Folgenden ist eine erfindungsgemäße Beleuchtungsvorrichtung an Hand der **Figuren 3 - 10** näher erläutert, mit der die Nachteile es Standes der Technik gelindert oder behoben werden können. Es wird dabei im Folgenden davon ausgegangen, dass die Beleuchtungsvorrichtung per se derart ausgerichtet ist, dass sie die in den anschließenden Lichtbildern gezeigten und im Text beschriebenen Lichtbilder erzeugt. Grundsätzlich kann die Beleuchtungsvorrichtung an sich auch anders ausgerichtet sein (und richtet dann ihr Licht in einen anderen Punkt als den im Folgenden beschriebenen Punkt HV), diese Situation ist im Anschluss, beginnend mit **Figur 15** näher erörtert.

Die **Figuren 3 und 4** zeigen allgemein erfindungsgemäße Beleuchtungsvorrichtung 1 für einen Kraftfahrzeugscheinwerfer zum Erzeugen zwei Lichtverteilungen, mit einem Optikkörper 2 sowie zwei Lichtquellen 30, 40. Das verwendete Koordinatensystem wurde eingangs bereits erörtert und wird hier nicht mehr näher beschrieben.

Die Lichtquellen 30, 40 sind vorzugsweise Leuchtdioden (LEDs), insbesondere weisen diese eine ebene Licht-Abstrahlfläche auf. Die Hauptabstrahlrichtungen der Lichtquellen, insbesondere die Normalvektoren auf die Licht-Abstrahlflächen der LEDs sind vorzugsweise zueinander und zu der optischen Achse X des Optikkörpers 2 parallel.

Der Optikkörper 2 ist aus einem optisch transparenten Material gebildet und weist einen Lichteinkoppelbereich 10 und eine Lichtaustrittsfläche 11 auf. Licht der Lichtquellen 30, 40, welches über den Lichteinkoppelbereich 10 in den Optikkörper 2 eingespeist wird, tritt zumindest teilweise, vorzugsweise vollständig über die Lichtaustrittsfläche 11 aus.

Der Lichteinkoppelbereich 10 ist aus einer zentralen Lichteinkoppelfläche 100 und einer seitlichen Seiteneinkoppelfläche 200 gebildet, wobei die zentrale Lichteinkoppelfläche 100 den Lichtquellen 30, 40 direkt gegenüberliegt, sodass der Normalenvektor der Lichtquellen 30, 40 die zentrale Lichteinkoppelfläche 100 durchstößt.

Die Seiteneinkoppelfläche 200 schließt an die zentrale Lichteinkoppelfläche 100 derart an, dass eine Vertiefung in dem Optikkörper 2 gebildet ist, in oder gegenüber welcher die Lichtquellen 30, 40 angeordnet sind und in welche die Lichtquellen 30, 40 ihr Licht abstrahlen.

Die beiden Lichtquellen 30, 40 auf einer gemeinsamen Geraden G, welche in einer Vertikalrichtung R verläuft, die parallel zu der Vertikalachse Z verläuft. In Vertikalrichtung gesehen liegt die erste Lichtquelle 30 oberhalb der zweiten Lichtquelle 40.

Der Lichteinkoppelbereich 10 weist zwei Brennpunkt F1, F2 auf (oder bildet diese), wobei eine der Lichtquellen 30 in einem der Brennpunkt F1 (erster Brennpunkt) und die andere Lichtquelle 40 in dem anderen Brennpunkt F2 (zweiter Brennpunkt) angeordnet ist. Die Brennpunkte F1, F2 können dabei innerhalb der Vertiefung oder auch außerhalb liegen.

Beispielsweise ist es aus dem Stand der Technik bekannt, dass zur Realisierung von zwei (oder mehr) unterschiedlichen Lichtfunktionen bzw. Lichtverteilungen (bzw. Teillichtverteilungen) zwei oder mehr Optikkörper verwendet werden, wobei jeder Optikkörper über eine ihm eigens zugeordnete Lichtquelle verfügt. Es ist augenscheinlich, dass dies zu einem erhöhten Bauraumbedarf führt, außerdem ergeben sich häufig in Folge einer zwangsläufig notwendigen separierten Anordnung der Optikkörper Inhomogenitäten.

Der Optikkörper 2 weist nun den folgenden Aufbau auf:
Die Seiteneinkoppelfläche 200 des Lichteinkoppelbereiches 10 sind derart ausgestaltet, dass in einem Bereich, der in Vertikalrichtung R zumindest teilweise oder vollständig oberhalb einer ersten Horizontalebene E1 liegt, in welcher die erste Lichtquelle 30 angeordnet ist, die Seitenbegrenzungsfläche 200 einen ersten, gekrümmt ausgebildeten Seitenbegrenzungsflächenabschnitt 201 aufweist, und in einem Bereich, der in Vertikalrichtung R zumindest teilweise oder vollständig unterhalb einer zweiten Horizontalebene E2 liegt, in welcher die zweite Lichtquelle 40 angeordnet ist, die Seitenbegrenzungsfläche 200 einen zweiten, gekrümmt ausgebildeten Seitenbegrenzungsflächenabschnitt 202 aufweist.

Die Begriffe "oben" und "unten" sind wieder in dem eingangs beschriebenen Koordinatensystem zu sehen. Bei einer real verdrehten Anordnung der Beleuchtungsvorrichtung, wie ebenfalls eingangs angesprochen, können oben und unten natürlich auch seitlich liegen oder vertauscht sein.

Die Horizontalebenen E1, E2 sind Ebenen, die parallel zu der X, Y-Ebene verlaufen, auf welche die Vertikalachse Z orthogonal steht.

Die beiden Seitenbegrenzungsflächenabschnitt 201, 202 sind über Seitenbegrenzungsflächen-Verbindungsabschnitte 203, 204 miteinander verbunden.

Die zentrale Lichteinkoppelfläche 10 ist wie folgt ausgebildet ist: ausgehend von jedem Seitenbegrenzungsflächen-Verbindungsabschnitt 203, 204 erstreckt sich jeweils eine Zentraleinkoppelfläche 103, 104 in Richtung des anderen Seitenbegrenzungsflächen-Verbindungsabschnittes 204, 203, wobei die Zentraleinkoppelflächen 103,104 aufeinander zulaufen und in eine gemeinsame Zentralkante 110 münden. Oberhalb und unterhalb der Zentraleinkoppelflächen 103, 104 erstrecken sich zwei Verbindungseinkoppelflächen 101, 102, welche die Zentraleinkoppelflächen 103, 104 mit den Seitenbegrenzungsflächenabschnitten 201, 202 verbinden.

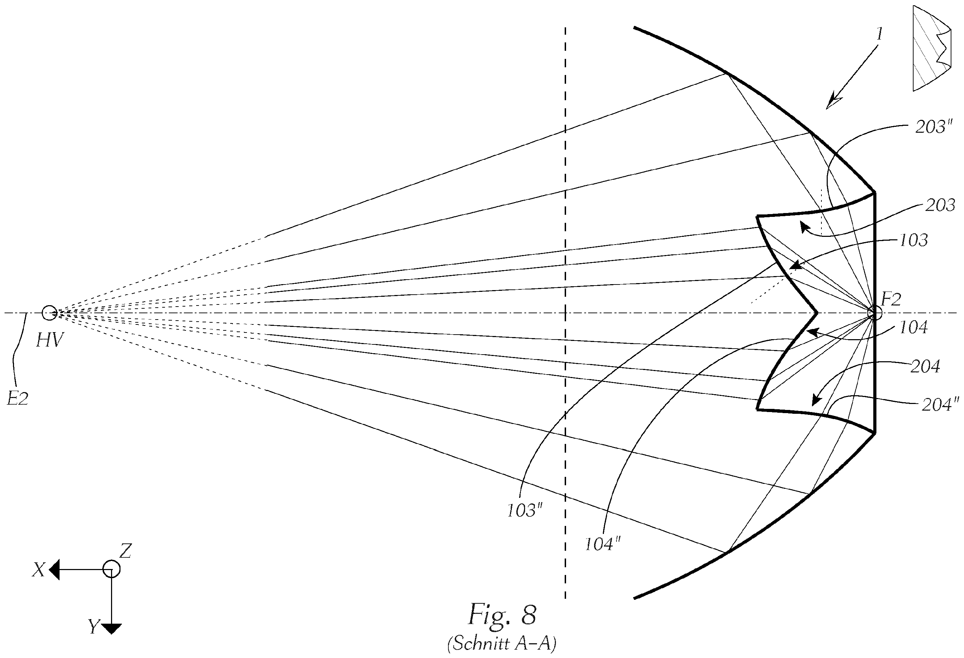

Die Zentraleinkoppelflächen 103, 104 sind in Horizontalschnittebenen, das sind Schnittebenen, die parallel zu der X,Y-Ebene verlaufen, auf welche die Vertikalachse Z orthogonal steht, konkav gekrümmt sind, sodass sich konkave Zentraleinkoppelflächen-Konturen 103", 104" ergeben, siehe **Figur 8****.** (Betrachtungspunkt ist dabei beispielsweise ein Bereich um einen Brennpunkt, etwa Brennpunkt F2 in **Figur 8**.)

Die Verbindungseinkoppelflächen 101,102 sind derart geformt, dass sie jeweils einen Brennpunkt für eine Lichtquelle bilden, sodass Licht, das von den Lichtquellen 30, 40 kommend in den Optikkörper 2 eintritt, im Lichtbild in einen gemeinsamen Punkt, z.B. den Punkt HV gebrochen wird, unter der vorzugsweisen Annahme einer ebenen Lichtaustrittsfläche 11, auf welche die optische Achse X orthogonal steht. Die Lichtaustrittsfläche kann aber auch gekrümmt ausgeführt sein und wirkt dann als weitere Lichtverteilung-formende Linsengrenzfläche; dies gilt auch allgemeinsten Zusammenhang und Umfang der vorliegenden Erfindung und ist nicht auf die in den Figuren beschriebene Ausführungsform beschränkt. Die wie beschrieben konkav gekrümmten Zentraleinkoppelflächen 103,104, die räumlich gesehen beispielsweise Zylinderlinsen bilden, sind derart geformt, dass für jede der in ihrem Brennpunkt sitzenden Lichtquellen deren Lichtstrahlen, die auf die Zentraleinkoppelflächen abgestrahlt werden, beim Eintritt in den Optikkörper in den Punkt HV gebrochen werden.

Bezüglich der Begriffe "konkav" und "konvex" wird z.B. folgendes festgehalten: betrachtet man einen Schnitt durch einen Körper in einer Schnittebene, so bezeichnen wir eine den Körper in dieser Schnittebene begrenzende Schnittkurve als konkav, wenn die Verbindungslinie der zwei Endpunkte der Schnittkurve außerhalb des Körpers liegt; verläuft die Verbindungslinie innerhalb des Optikkörpers, ist die Schnittkurve konvex.

Vergleichbares gilt im Räumlichen - wenn eine ebene Verbindungsfläche von Punkten auf einer betrachteten Fläche außerhalb des Körpers liegt, ist die betrachtete Fläche konkav, liegt die ebene Verbindungsfläche innerhalb des Körpers, ist die betrachtete Fläche konvex.

Die an die zentrale Lichteinkoppelfläche angrenzenden Seitenbegrenzungsflächen brechen Lichtstrahlen zu reflektierenden, insbesondere totalreflektierenden Außenflächen 501a, 501b, 502a, 502b, 503, 504, d.h. zu der Mantelfläche 500 des Optikkörpers und werden von diesen vorzugsweise ebenfalls in den gemeinsamen Punkt, z.B. den Punkt HV gerichtet. Entsprechend sind diese den Mantel 500 bildenden Außenflächen entsprechend geformt.

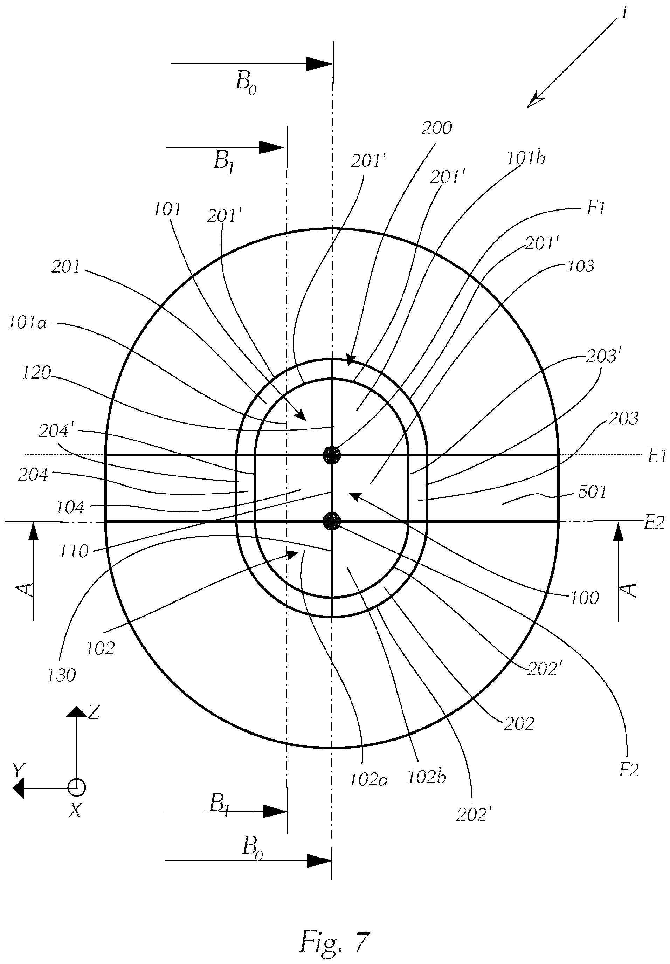

Die Seitenbegrenzungsflächen-Verbindungsabschnitte 203, 204 weisen in ersten Vertikalschnittebenen eine geradlinige Verbindungsabschnitt-Kontur 203', 204' aufweisen, siehe **Figur 7****.**

In Horizontalschnittebenen weisen die Seitenbegrenzungsflächen-Verbindungsabschnitte 203, 204 konvexe Verbindungsabschnitt-Kontur 203", 204" auf, siehe z.B. **Figur 8****.**

In ersten Vertikalschnittebenen weisen die Seitenbegrenzungsflächenabschnitte 201, 202 eine konkav gekrümmte Seitenbegrenzungsflächenabschnitt-Kontur 201', 202', wie dies **Figur 7** entnommen werden kann.

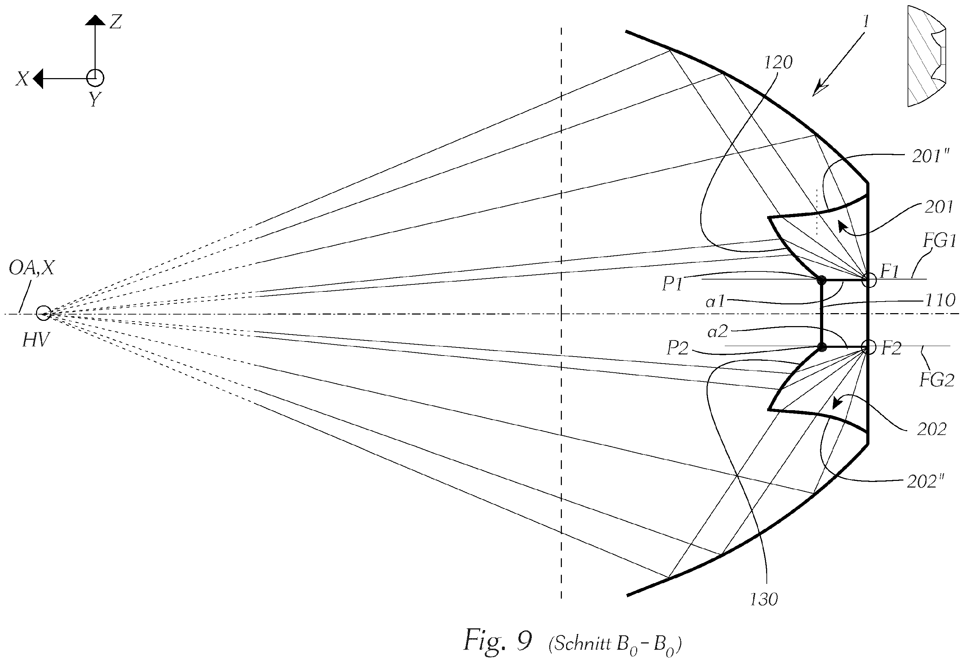

Die Seitenbegrenzungsflächenabschnitte 201, 202 sind konvex gekrümmt sind, siehe z.B. die konvexen Konturen 201", 202" aus **Figur 9****.** In vertikalen Schnitten (**Figur 7**) sind somit die Seitenbegrenzungsflächenabschnitte (bzw. die sich in diesen Schnitten ergebende Kontur) somit konkav, ihre Fläche selbst ist aber ist im Raum konvex ausgebildet.

Die Flächen 201, 202 sind also räumlich gesehen nach Außen, also der jeweiligen Lichtquelle zu gewölbt, also konvex.

Vorzugsweise sind alle bisher beschriebenen und noch zu beschreibenden Flächen zumindest des Lichteinkoppelbereiches glatt ausgebildet. Durch eine solche vorteilhafte Ausgestaltung ist in jedem Punkt des Lichteinkoppelbereiches eine Flächennormale definiert, sodass Lichtbrechung nach dem Snellius'schen Brechungsgesetzes in Abhängigkeit des Brechungsindex des transparenten Materials erfolgt.

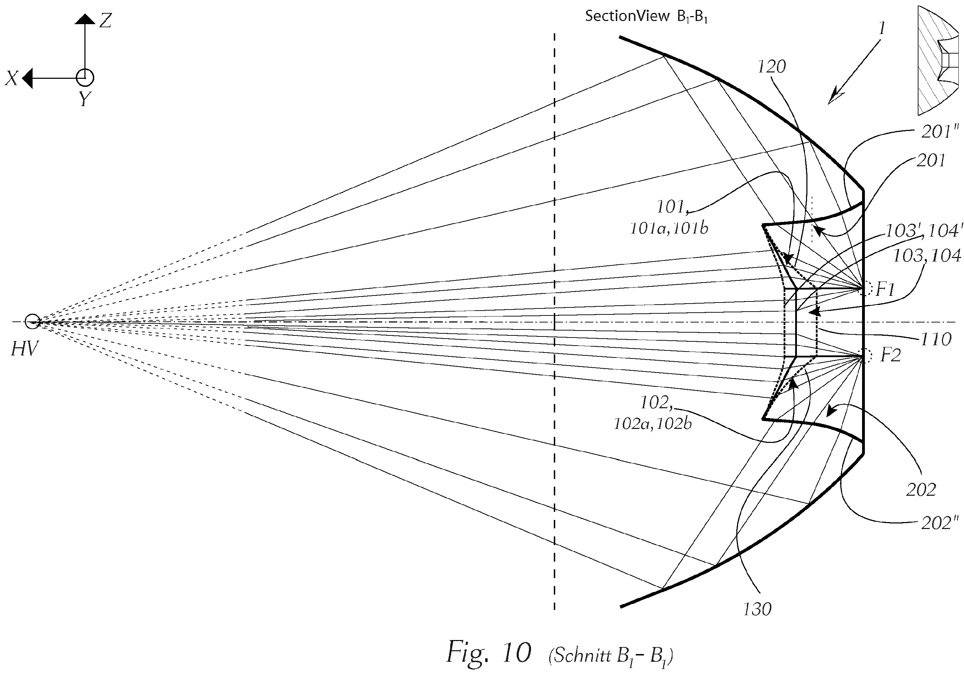

Die Zentraleinkoppelflächen 103, 104 sind in vertikaler Richtung Z, R gerade ausgebildet, sodass sich in zweiten Vertikalschnittebenen gerade Zentraleinkoppelflächen-Konturen 103', 104' ergeben, welche vorzugsweise parallel zu der gemeinsamen Zentralkante 110 verlaufen **(siehe** **Figur 10****).** Die Zentraleinkoppelflächen 103,104 sind entsprechend als Zylinderlinsen ausgebildet, mit der Höhe des Zylinders parallel zu der Vertikalachse Z, somit mit dem einer Zylinderlinse entsprechenden Brechungsverhalten.

Jede der Verbindungseinkoppelflächen 101,102 ist durch jeweils eine Verbindungskante 120, 130 in zwei Unter-Verbindungseinkoppelflächen 101a, 101b, 102a, 102b unterteilt ist. Insbesondere verlaufen dabei die Verbindungskanten 120,130 in vertikaler Richtung gesehen in dieselbe Richtung wie die Zentralkante 110, d.h. die Zentralkante 110 verläuft in vertikaler Richtung R, d.h. parallel zu der Z-Achse (siehe **Figur 7****).**

Die Verbindungskanten 120,130 sind dabei in zweiten Vertikalschnittebenen konkav gekrümmt ausgebildet. Dabei kann jede der Unter-Verbindungseinkoppelflächen 101a, 101b, 102a, 102b konkav gekrümmt ausgebildet sein, sodass, wie dies **Figur 10** zeigt, die Unter-Verbindungseinkoppelflächen 101a, 101b, 102a, 102b von dem jeweiligen Brennpunkt weggewölbt sind.

Wie den Figuren zu entnehmen ist, sind der Lichteinkoppelbereich 10 und insbesondere auch der der Optikkörper 2 symmetrisch bezüglich der X,Y-Ebene und bezüglich der X,Z-Ebene. Die optische Achse X des Optikkörpers 2 verläuft symmetrisch zwischen den Lichtquellen.

Auf diese Weise können zwei möglichst idente Ausleuchtungsbereiche oder Lichtverteilungen mit den beiden Lichtquellen erzeugt werden.

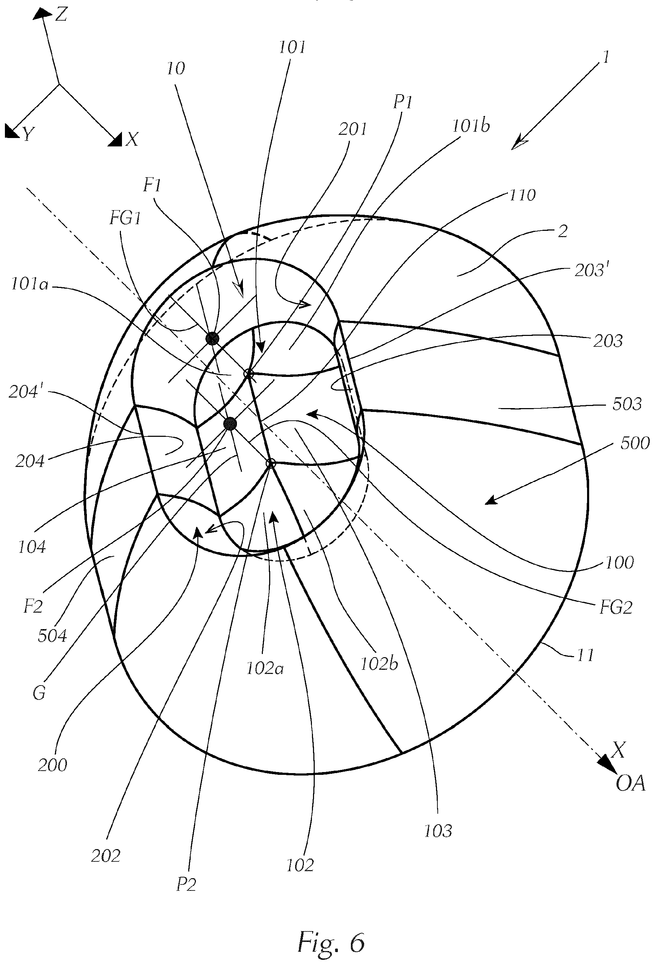

Die Zentralkante 110 schließt jeweils an eine Verbindungskante 120, 130 in einem Anschlusspunkt P1, P2 an, jeweils ein Brennpunkt F1, F2 liegt auf einer Brennpunktgeraden FG1, FG2 **(****Figur 6****)** liegt, wobei jede Brennpunktgerade FG1, FG2 durch einen Anschlusspunkt P1, P2 und parallel zu der optischen Achse X verläuft. Der erste Brennpunkte F1 weist zu seinem Anschlusspunkt P1 denselben Abstand a1 auf wie der zweite Brennpunkt F2 einen Abstand a2 zu seinem Anschlusspunkt P2 hat.

Wie vorstehend schon beschrieben, ist der Lichteinkoppelbereich 10 des Optikkörpers 2 über eine Mantelfläche 500 mit der Lichtaustrittsfläche 11 verbunden. Dabei ist die Mantelfläche 500 in Bereichen 503, 504 anschließend an die Seitenbegrenzungsflächen-Verbindungsabschnitte 203, 204 in vertikaler Richtung R gerade ausgebildet ist.

Räumlich gesehen sind diese Seitenbegrenzungsflächen und die Mantelfläche generell nach Außen gekrümmt. Licht, das sich im Optikkörper fortpflanzt und auf diese Mantelfläche auftrifft, wird vorzugsweise reflektiert, insbesondere totalreflektiert, und vorzugsweise in den Punkt HV gerichtet. Das so entstehende Lichtbündel, insbesondere Parallellichtstrahlbündel breitet somit vorzugsweise wie jene Lichtstrahlen, die im zentralen Bereich des Lichteinkoppelbereiches gebrochen werden, aus.

Im Hinblick auf die dabei in den **Figuren 8 -10** gezeigten, im Punkt HV zusammenlaufenden Lichtstrahlen sein angemerkt, dass sich dieser Punkt im Fernfeld, bspw. in 25 Metern auf einem Messschirm befindet sodass das austretende Lichtbündel real ein Parallelstrahlbündel darstellt.

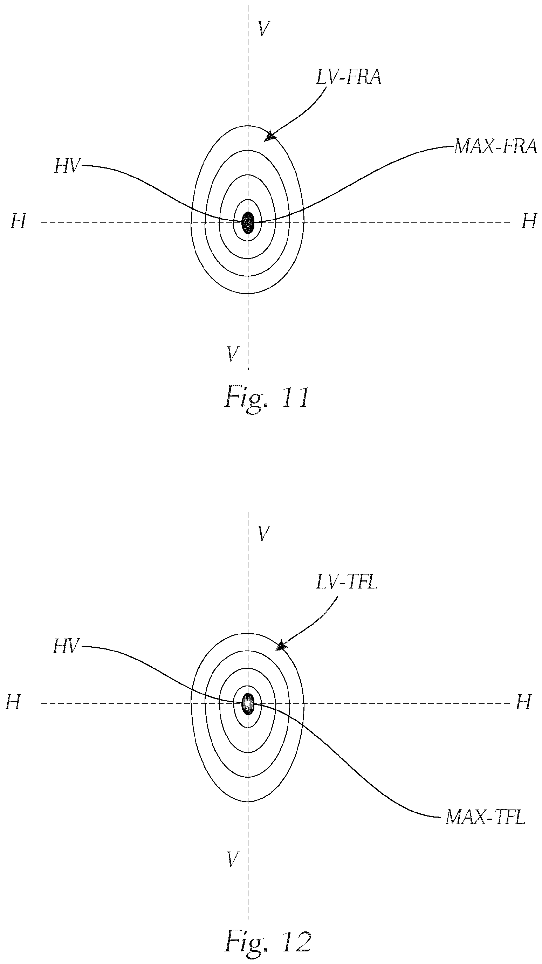

**Figur 11** zeigt nun einen Ausleuchtungsbereich bzw. eine Lichtverteilung LV-FRA, deren Maximum MAX-FRA im Punkt HV liegt. Beispielsweise wird dazu eine erste Lichtquelle 30 verwendet, die oranges Licht (normgerecht wird von der Farbe "amber" (= bernsteingelb) gesprochen) emittiert, um die Lichtverteilung eines Fahrtrichtungsanzeigers zu erzeugen

In Folge der Symmetrie des Optikkörpers ist die Lichtverteilung LV-FRA symmetrisch zur Linie V-V, nachdem allerdings die Lichtquelle 30 nicht auf der optische Achse X liegt sondern darüber (bzw. oberhalb der X,Y-Ebene, ist die Lichtverteilung zu der H-H-Linie nicht symmetrisch, sondern leicht etwa eiförmig ausgestaltet.

**Figur 12** zeigt die mit der zweiten Lichtquelle 40 erzeugte Lichtverteilung LV-TFL, z.B., eine Tagfahrlichtverteilung. Das Maximum MAX-TFL liegt wiederum im Punkt HV, die Lichtverteilung LV-TFL ist symmetrisch zu der Linie V-V, aber nicht zu der Linie H-H.

Die Lichtverteilung LV-TFL aus **Figur 12****,** gespiegelt um die Linie H-H, würde allerdings den identischen Bereich wie in **Figur 11** gezeigt ausleuchten, bei identischen Lichtquellen wäre die gespiegelte Lichtverteilung auch identisch zu der Lichtverteilung aus **Figur 11****.**

Durch die erfindungsgemäße Ausgestaltung des Optikkörpers wird es möglich, für jede der Lichtquellen einen Brennpunkt im Lichteinkoppelbereich derart zu realisieren, dass von jeder der jeweils in einem Brennpunkt angeordneten Lichtquellen stammendes Licht - unter der Annahme von punktförmigen Lichtquellen - im Fernfeld in einen Punkt, beispielsweise (bei entsprechender Ausrichtung) in den sogenannten HV-Punkt, der sich in bekannter Weise als Schnittpunkt der H-H-Linie und der V-V-Line ergibt, abgestrahlt wird. Die jeweils real von jeder Lichtquelle gebildete Lichtverteilung ergibt sich in Folge der real gegebenen Ausdehnung der jeweiligen Lichtquelle, mit einem Maximum der Beleuchtungsstärke in dem gemeinsamen Punkt, z.B. im Punkt HV.

Bei der erfindungsgemäßen Lösung können somit zwei räumlich getrennte Lichtquellen, insbesondere LED-Lichtquellen, Licht in den Optikkörper einspeisen und das Licht jeder der Lichtquellen beleuchtet im Fernfeld, z.B. auf einem Messschirm, etwa in 25 Metern Entfernung vor der Beleuchtungsvorrichtung, im Wesentlichen denselben Ausleuchtungsbereich, oder die Ausleuchtungsbereiche der beiden Lichtquellen sind ident.

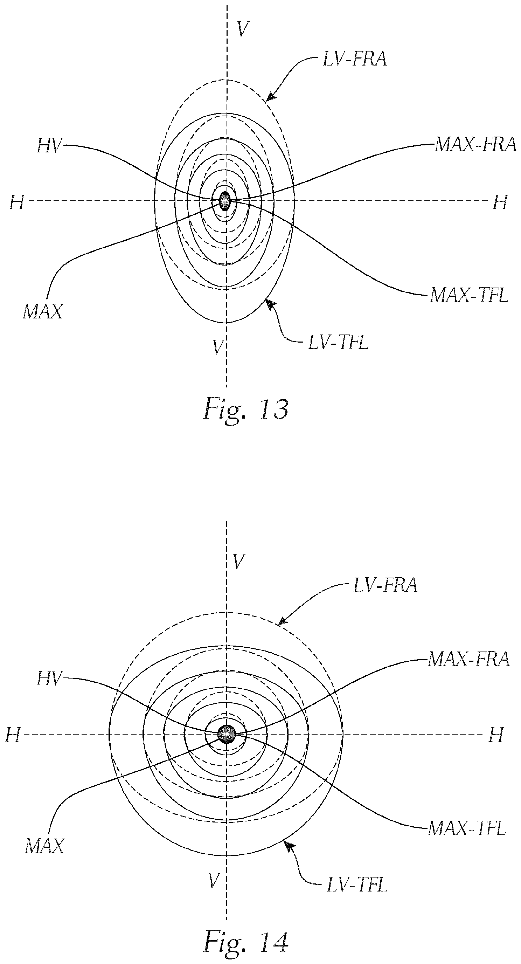

**Figur 13** zeigt schließlich noch eine Überlagerung der Ausleuchtungsbereiche bzw. Lichtverteilungen aus **Figur 12****.**

Die vorstehenden Überlegungen gehen davon aus, dass die Beleuchtungsvorrichtung 1 mehr oder weniger direkt die Lichtverteilung erzeugt und wie beschrieben derart ausgerichtet ist, dass der Punkt HV beleuchtet wird.

Beispielsweise aus Designgründen kann es aber wünschenswert sein, dass die Lichtquelle in einem Kraftfahrzeug nicht in Vorwärtsrichtung ausgerichtet werden können, sondern in einer anderen Richtung ausgerichtet sind oder ausgerichtet sein müssen. In diesem Fall würde die Beleuchtungsvorrichtung wie vorstehend beschrieben nicht einen Punkt HV, sondern einen anderen Punkt mit den beiden Lichtquellen beleuchtet.

Üblicherweise ist allerdings gewünscht, den Punkt HV wie beschrieben zu beleuchten. Um dies trotzdem unter den vorstehend beschriebenen Randbedingung realisieren zu können, ist beispielsweise der Beleuchtungsvorrichtung 1 Lichtleitoptik 700 vorgeschaltet, welche wiederum eine Lichtleitoptikaustrittsfläche 701 aufweist. Beleuchtungsvorrichtung 1 und Lichtleitoptik 700 bilden zusammen ein Beleuchtungssystem 800.

Aus der Lichtaustrittsfläche 11 des Optikkörpers 2 austretendes Licht tritt in die Lichtleitoptik 700 ein, pflanzt sich in dieser fort und tritt über die Lichtleitoptikaustrittsfläche 701 aus zur Bildung der gewünschten Lichtverteilung aus.

Die Lichtleitoptik 700 ist vorzugsweise wiederum ein Vollkörper, welcher transparent und lichtleitend ist, und vorzugsweise wird an seinen Seitenflächen auftreffendes, sich im Lichtleitkörper 700 fortpflanzendes Licht totalreflektiert.

Besonders vorteilhaft ist es, wenn der Optikkörper 2 und der Lichtleitkörper 700 einstückig miteinander und aus demselben Material gebildet sind, also einen Körper bilden. In diesem Fall ist die Lichtaustrittsfläche 11 der Beleuchtungsvorrichtung 2 keine reale Grenzfläche, sondern lediglich eine gedachte Abschlussfläche der Beleuchtungsvorrichtung 2.

Der Lichtleitkörper 700 weist eine optische Achse X1 auf, welche typischer Weise nicht mit der optischen Achse X des Optikkörpers 2 der Beleuchtungsvorrichtung 1 zusammenfällt. Entsprechend wird der Punkt HV nur durch Mitwirken des Lichtleitkörpers 700 beleuchtet, die Beleuchtungsvorrichtung 1 alleine würde einen anderen Punkt beleuchten oder je nach Ausrichtung gar kein Licht auf einen Messschirm vor einem Kraftfahrzeug, in welches sie eingebaut ist, abstrahlen.

Der Lichtleitkörper 700 weist, wie bereits erwähnt, eine optische Achse X1, eine Vertikalachse Z1 und eine Horizontalachse Y1 auf (für diese zueinander orthogonal stehenden Achsen gelten wiederum die eingangs getroffenen Feststellungen). Die Lichtleitoptikaustrittsfläche 701 weist bevorzugt eine optische Struktur, insbesondere Zylinderlinsen 702 auf, welche das aus der Lichtleitoptikaustrittsfläche 701 austretende Licht in die Breite, also horizontal aufweitet. Dazu verläuft die Höhe dieser Zylinderlinsen 702 vorzugsweise parallel zu der Vertikalachse Z1, wie dies in **Figur 19** angedeutet ist.

Wie nun in den **Figuren 17 und 18** gezeigt, welche eine Projektion der Lichtleitoptikaustrittsfläche 701 und des Optikkörpers 2 in eine Vertikalebene zeigen, können die Vertikalachse Z der Beleuchtungsvorrichtung 2 und die Vertikalachse Z1 der Lichtleitoptikaustrittsfläche 701 - unabhängig von der Ausrichtung der optischen Achse X und X1 zueinander - parallel verlaufen (siehe **Figur 17****),** oder in der Vertikalebene zueinander verdreht sein **(****Figur 18****).**

Mit der Zylinderlinsen-Struktur kann eine Aufweitung des austretenden Lichtbündels in eine spezielle Richtung gesteuert werden.

Zurückkommend auf **Figur 14** zeigt diese überlagerten Lichtverteilungen erzeugt mit einem Beleuchtungssystem 800 wie vorstehend beschrieben. Hier wird wieder, analog zu der Darstellung in den **Figuren 11** - **13****,** jeweils der Punkt HV beleuchtet, der Unterschied ist nun, dass durch die Zylinderlinsen des Beleuchtungssystem 800 die Lichtverteilungen LV-FRA, LV-TRA bzw. der jeweilige Ausleuchtungsbereich horizontal verbreitert ist.

Bei der vorliegenden Erfindung können generell beispielsweise folgende Kombinationen von Lichtfunktionen bzw. den entsprechenden Lichtverteilungen realisiert werden:
1. Lichtquellen, insbesondere LEDs mit unterschiedlicher Farbe:
   - Erste Lichtquelle 30 erzeugt Fahrtrichtungsanzeiger und
   - Zweite Lichtquelle 40 erzeugt Tagfahrlicht und optional ein Positionslicht oder
   - Erste Lichtquelle 30 erzeugt Schlussleuchte und
   - Zweite Lichtquelle 40 erzeugt ein Rückfahrlicht
2. Lichtquellen, insbesondere LEDs mit gleicher Farbe:
   - Erste Lichtquelle 30 erzeugt Positionslicht und
   - Zweite Lichtquelle 40 erzeugt Tagfahrlicht oder
   - Erste Lichtquelle 30 erzeugt Schlussleuchte und
   - Zweite Lichtquelle 40 erzeugt Bremsleuchte
3. Lichtquellen, insbesondere LEDs mit gleicher Farbe:
   - Beide Lichtquellen 30, 40 erzeugen jeweils einen Fernlichtspot, somit Verdopplung der Beleuchtungsstärke

Sind mehrere Lichtaustrittsflächen von erfindungsgemäßen Beleuchtungsvorrichtungen oder Beleuchtungssystemen nebeneinander angeordnet, kann ein Fahrtrichtungsanzeiger auch im Lauflichtmodus betrieben werden.

## Patentansprüche

1. Beleuchtungsvorrichtung (1) für einen für einen Kraftfahrzeugscheinwerfer und/oder für eine Heckleuchte eines Kraftfahrzeuges und/oder für eine Signalleuchte für einen Kraftfahrzeugschein zum Erzeugen
von zumindest zwei, insbesondere genau zwei Lichtverteilungen, oder zur Erzeugung von zumindest zwei, insbesondere genau zwei unterschiedlichen Lichtfunktionen,
wobei die Beleuchtungsvorrichtung (1) einen Optikkörper (2) sowie zwei Lichtquellen (30, 40), eine erste Lichtquelle (30) und eine zweite Lichtquelle (40), insbesondere LED-Lichtquellen umfasst, wobei jede der Lichtquellen (30, 40) unabhängig von der oder den anderen Lichtquellen ansteuerbar ist,
wobei der Optikkörper (2) aus einem optisch transparenten Material gebildet ist,
und wobei der Optikkörper (2) einen Lichteinkoppelbereich (10) und eine Lichtaustrittsfläche (11) aufweist,
und wobei Licht der Lichtquellen (30, 40), welches über den Lichteinkoppelbereich (10) in den Optikkörper (2) eingespeist wird, zumindest teilweise über die Lichtaustrittsfläche (11) austritt,
wobei der Lichteinkoppelbereich (10) aus einer zentralen Lichteinkoppelfläche (100) und einer seitlichen Seiteneinkoppelfläche (200) gebildet ist,
wobei die zentrale Lichteinkoppelfläche (100) den Lichtquellen (30, 40) gegenüberliegt,
und die Seiteneinkoppelfläche (200) an die zentrale Lichteinkoppelfläche (100) derart anschließt, dass eine Vertiefung in dem Optikkörper (2) gebildet ist, in oder gegenüber welcher die Lichtquellen (30, 40) angeordnet sind und in welche die Lichtquellen (30, 40) ihr Licht abstrahlen,
wobei die beiden Lichtquellen (30, 40) auf einer Gerade (G) liegen, welche in einer Vertikalrichtung (R) verläuft, welche parallel zu einer Vertikalachse (Z) verläuft,
und wobei in Vertikalrichtung gesehen die erste Lichtquelle (30) oberhalb der zweiten Lichtquelle (40) liegt,
und wobei der Lichteinkoppelbereich (10) zwei Brennpunkt (F1, F2) aufweist, wobei eine der Lichtquellen (30) in einem der Brennpunkt (F1) und die andere Lichtquelle (40) in dem anderen Brennpunkt (F2) angeordnet ist,
**dadurch gekennzeichnet, dass**
die Seiteneinkoppelfläche (200) des Lichteinkoppelbereiches (10) derart ausgestaltet ist, dass
- in einem Bereich, der in Vertikalrichtung (R) zumindest teilweise oder vollständig oberhalb einer ersten Horizontalebene (E1) liegt, in welcher die erste Lichtquelle (30) angeordnet ist, die Seitenbegrenzungsfläche (200) einen ersten, gekrümmt ausgebildeten Seitenbegrenzungsflächenabschnitt (201) aufweist, und
- in einem Bereich, der in Vertikalrichtung (R) zumindest teilweise oder vollständig unterhalb einer zweiten Horizontalebene (E2) liegt, in welcher die zweite Lichtquelle (40) angeordnet ist, die Seitenbegrenzungsfläche (200) einen zweiten, gekrümmt ausgebildeten Seitenbegrenzungsflächenabschnitt (202) aufweist,
- wobei die Horizontalebenen (E1, E2) Ebenen sind, die parallel zu einer Ebene (X,Y) verlaufen, auf welche die Vertikalachse (Z) orthogonal steht, und welche die optische Achse (X) enthält, und wobei
- die beiden Seitenbegrenzungsflächenabschnitt (201, 202) über Seitenbegrenzungsflächen-Verbindungsabschnitte (203, 204) miteinander verbunden sind,
- und die zentrale Lichteinkoppelfläche (10) wie folgt ausgebildet ist:
o ausgehend von jedem Seitenbegrenzungsflächen-Verbindungsabschnitt (203, 204) erstreckt sich jeweils eine Zentraleinkoppelfläche (103, 104) in Richtung des anderen Seitenbegrenzungsflächen-Verbindungsabschnittes (204, 203), wobei die Zentraleinkoppelflächen (103, 104) aufeinander zulaufen und in eine gemeinsame Zentralkante (110) münden;
o oberhalb und unterhalb der Zentraleinkoppelflächen (103, 104) erstrecken sich zwei Verbindungseinkoppelflächen (101, 102), welche die Zentraleinkoppelflächen (103, 104) mit den Seitenbegrenzungsflächenabschnitten (201, 202) verbinden,
o und wobei die Zentraleinkoppelflächen (103, 104) in Horizontalschnittebenen, das sind Schnittebenen, die parallel zu einer Ebene (X,Y) verlaufen, auf welche die Vertikalachse (Z) orthogonal steht, und welche die optische Achse (X) enthält, konkav gekrümmt sind, sodass sich konkave Zentraleinkoppelflächen-Konturen (103", 104") ergeben.

2. Beleuchtungsvorrichtung nach Anspruch 1, **dadurch gekennzeichnet, dass** die Seitenbegrenzungsflächen-Verbindungsabschnitte (203, 204) in ersten Vertikalschnittebenen, das sind Schnittebenen, die parallel zu einer Ebene (Y,Z) verlaufen, auf welche die optische Achse (X) orthogonal steht, und welche die Vertikalachse (Z) enthält, eine geradlinige Verbindungsabschnitt-Kontur (203', 204') aufweisen.

3. Beleuchtungsvorrichtung nach Anspruch 1 oder 2, **dadurch gekennzeichnet, dass** die Seitenbegrenzungsflächen-Verbindungsabschnitte (203, 204) in Horizontalschnittebenen, das sind Schnittebenen, die parallel zu einer Ebene (X,Y) verlaufen, auf welche die Vertikalachse (Z) orthogonal steht, und welche die optische Achse (X) enthält, eine konvexe Verbindungsabschnitt-Kontur (203", 204") aufweisen.

4. Beleuchtungsvorrichtung nach einem der Ansprüche 1 bis 3, **dadurch gekennzeichnet, dass** die Seitenbegrenzungsflächenabschnitte (201, 202) in ersten Vertikalschnittebenen, das sind Schnittebenen, die parallel zu einer Ebene (Y,Z) verlaufen, auf welche die optische Achse (X) orthogonal steht, und welche die Vertikalachse (Z) enthält, eine konkav gekrümmte Seitenbegrenzungsflächenabschnitt-Kontur (201', 202') aufweisen.

5. Beleuchtungsvorrichtung nach einem der Ansprüche 1 bis 4, **dadurch gekennzeichnet, dass** die Seitenbegrenzungsflächenabschnitte (201, 202) konvex gekrümmt sind.

6. Beleuchtungsvorrichtung nach einem der Ansprüche 1 bis 5, **dadurch gekennzeichnet, dass** die Zentraleinkoppelflächen (103, 104) in vertikaler Richtung (Z, R) gerade ausgebildet sind, sodass sich in zweiten Vertikalschnittebenen, das sind Schnittebenen, die parallel zu einer Ebene (X,Z) verlaufen, welche von der optischen Achse (X) und der Vertikalachse (Z) aufgespannt wird, gerade Zentraleinkoppelflächen-Konturen (103', 104') ergeben, welche vorzugsweise parallel zu der gemeinsamen Zentralkante (110) verlaufen.

7. Beleuchtungsvorrichtung nach einem der Ansprüche 1 bis 6, **dadurch gekennzeichnet, dass** jede der Verbindungseinkoppelflächen (101, 102) durch jeweils eine Verbindungskante (120, 130) in zwei Unter-Verbindungseinkoppelflächen (101a, 101b, 102a, 102b) unterteilt ist, wobei beispielsweise die Verbindungskanten (120, 130) in vertikaler Richtung gesehen in dieselbe Richtung wie die Zentralkante (110) verlaufen.

8. Beleuchtungsvorrichtung nach Anspruch 7, **dadurch gekennzeichnet, dass** die Verbindungskanten (120, 130) in zweiten Vertikalschnittebenen (X,Z) konkav gekrümmt ausgebildet sind.

9. Beleuchtungsvorrichtung nach einem der Ansprüche 1 bis 8, **dadurch gekennzeichnet, dass** der Lichteinkoppelbereich (10) und/oder der Optikkörper (2) symmetrisch bezüglich einer Ebene (X,Y), welche von der optischen Achse (X) und einer Horizontalachse (Y) aufgespannt ist, und/oder bezüglich der Vertikalschnittebene (X,Z), welche von der optischen Achse (X) und der Vertikalachse (Z) aufgespannt wird, ist.

10. Beleuchtungsvorrichtung nach einem der Ansprüche 7 bis 9, **dadurch gekennzeichnet, dass** die Zentralkante (110) an eine Verbindungskante (120, 130) in einem Anschlusspunkt (P1, P2) anschließt, und wobei vorzugsweise jeweils ein Brennpunkt (F1, F2) auf einer Brennpunktgeraden (FG1, FG2) liegt, wobei eine Brennpunktgerade (FG1, FG2) durch einen Anschlusspunkt (P1, P2) und parallel zu der optischen Achse (X) verläuft, wobei beispielsweise der erste Brennpunkt (F1) zu seinem Anschlusspunkt (P1) denselben Abstand (a1) aufweist wie der zweite Brennpunkt (F2) einen Abstand (a2) zu seinem Anschlusspunkt (P2) hat.

11. Beleuchtungsvorrichtung nach einem der Ansprüche 1 bis 10, **dadurch gekennzeichnet, dass** der Lichteinkoppelbereich (10) über eine Mantelfläche (500) mit der Lichtaustrittsfläche (11) verbunden ist, wobei beispielsweise die Mantelfläche (500) in Bereichen (503, 504) anschließend an die Seitenbegrenzungsflächen-Verbindungsabschnitte (203, 204) in vertikaler Richtung (R) gerade ausgebildet ist.

12. Beleuchtungsvorrichtung nach einem der Ansprüche 1 bis 11, **dadurch gekennzeichnet, dass** die Lichtquellen (30, 40) jeweils zumindest eine Leuchtdiode umfassen oder aus einer Leuchtdiode bestehen.

13. Beleuchtungsvorrichtung nach einem der Ansprüche 1 bis 12, **dadurch gekennzeichnet, dass** jede Lichtquellen (30, 40) eine Hauptabstrahlrichtung aufweist, wobei beispielsweise die Hauptabstrahlrichtungen der Lichtquellen (30, 40) parallel zu der optischen Achse (X) des Optikkörpers (2) verlaufen.

14. Beleuchtungsvorrichtung nach einem der Ansprüche 1 bis 13, wobei die Beleuchtungsvorrichtung als Kraftfahrzeugscheinwerfer oder Heckleuchte eines Kraftfahrzeuges oder Signalleuchte für ein Kraftfahrzeug ausgebildet ist.

15. Beleuchtungssystem (800) umfassend eine Beleuchtungsvorrichtung nach einem der Ansprüche 1 bis 14, sowie einen Lichtleitkörper (700), in welchen Licht aus dem Optikkörper (2) der Beleuchtungsvorrichtung (1) eingekoppelt werden kann, und welches aus dem Lichtleitkörper (700) über eine Lichtleitoptikaustrittsfläche (701) zur Bildung von einer, zwei oder mehreren Lichtverteilungen austreten kann, wobei beispielsweise die Lichtleitoptikaustrittsfläche (701) Zylinderlinsen (702) aufweist, welche vorzugsweise in Richtung einer Vertikalachse (Z1) des Lichtleitkörpers (700) verlaufen.

16. Beleuchtungssystem nach Anspruch 15, **dadurch gekennzeichnet, dass** eine optische Achse (X1) des Lichtleitkörpers (700) und die optische Achse (X) des Optikkörpers (2) der Beleuchtungsvorrichtung (1) nicht zusammenfallen, und insbesondere zueinander um einen Winkel verdreht sind.

17. Beleuchtungssystem nach Anspruch 15 oder 16 **dadurch gekennzeichnet, dass** betrachtet in einer Projektion in eine Vertikalebene die Vertikalachse (Z) des Optikkörpers (2) und die Vertikalachse (Z1) des Lichtleitkörpers (700) parallel oder nicht parallel zueinander verlaufen.

18. Beleuchtungssystem nach einem der Ansprüche 15 bis 17, wobei das Beleuchtungssystem als Kraftfahrzeugscheinwerfer oder Heckleuchte eines Kraftfahrzeuges oder Signalleuchte für ein Kraftfahrzeug ausgebildet ist.

19. Vorrichtung umfassend zumindest eine Beleuchtungsvorrichtung (1) nach einem der Ansprüche 1 bis 14 und/oder umfassend zumindest ein Beleuchtungssystem (800) nach einem der Ansprüche 15 bis 18 wobei die Vorrichtung ein Kraftfahrzeugscheinwerfer oder eine Heckleuchte für ein Kraftfahrzeug oder eine Signalleuchte für ein Kraftfahrzeug ist.

## Claims

1. Illumination device (1) for a motor vehicle headlamp and/or for a rear lamp of a motor vehicle and/or for a signal lamp for a motor vehicle registration document for generating
of at least two, in particular exactly two light distributions, or for generating at least two, in particular exactly two different light functions,
the lighting device (1) comprising an optical body (2) and two light sources (30, 40), a first light source (30) and a second light source (40), in particular LED light sources, each of the light sources (30, 40) being controllable independently of the other light source or sources
wherein the optical body (2) is formed of an optically transparent material
and wherein the optical body (2) has a light input area (10) and a light output area (11),
and wherein light from the light sources (30, 40), which is fed into the optical body (2) via the light coupling region (10), emerges at least partially via the light exit surface (11),
wherein the light coupling-in region (10) is formed from a central light coupling-in surface (100) and a lateral side coupling-in surface (200),
wherein the central light coupling surface (100) is opposite the light sources (30, 40),
and the side coupling surface (200) adjoins the central light coupling surface (100) in such a way that a recess is formed in the optical body (2), in or opposite which the light sources (30, 40) are arranged and into which the light sources (30, 40) radiate their light,
wherein the two light sources (30, 40) lie on a straight line (G) which runs in a vertical direction (R) which is parallel to a vertical axis (Z)
and wherein, viewed in the vertical direction, the first light source (30) lies above the second light source (40)
and wherein the light coupling region (10) has two focal points (F1, F2), one of the light sources (30) being arranged in one of the focal points (F1) and the other light source (40) being arranged in the other focal point (F2),
**characterized in that**
the side coupling surface (200) of the light coupling region (10) is designed in such a way that
- in a region which, in the vertical direction (R), lies at least partially or completely above a first horizontal plane (E1) in which the first light source (30) is arranged, the side-coupling surface (200) has a first curved side-coupling surface portion (201), and
- in an area which lies in the vertical direction (R) at least partially or completely below a second horizontal plane (E2) in which the second light source (40) is arranged, the side boundary surface (200) has a second side boundary surface portion (202) which is formed in a curved shape,
- wherein said horizontal planes (E1, E2) are planes parallel to a plane (X,Y) to which said vertical axis (Z) is orthogonal and which includes said optical axis (X), and wherein
- the two side boundary surface portions (201, 202) are connected to each other via side boundary surface connecting portions (203, 204)
- and the central light injection surface (10) is formed as follows:
o starting from each side boundary surface connecting section (203, 204), a respective central coupling-in surface (103, 104) extends in the direction of the other side boundary surface connecting section (204, 203), the central coupling-in surfaces (103, 104) converging towards one another and opening into a common central edge (110);
o above and below the central coupling surfaces (103, 104) extend two connecting coupling surfaces (101, 102) connecting the central coupling surfaces (103, 104) to the side boundary surface portions (201, 202),
o and wherein the central coupling surfaces (103, 104) are concavely curved in horizontal section planes, which are section planes parallel to a plane (X,Y) to which the vertical axis (Z) is orthogonal, and which contains the optical axis (X), resulting in concave central coupling surface contours (103", 104").

2. Illumination device according to claim 1, **characterized in that** the side boundary surface connecting sections (203, 204) have a straight-line connecting section contour (203', 204') in first vertical section planes, which are section planes parallel to a plane (Y,Z) to which the optical axis (X) is orthogonal and which contains the vertical axis (Z).

3. Illumination device according to claim 1 or 2, **characterized in that** the side boundary surface connecting sections (203, 204) have a convex connecting section contour (203", 204") in horizontal section planes, which are section planes parallel to a plane (X,Y) to which the vertical axis (Z) is orthogonal and which contains the optical axis (X).

4. Illumination device according to any one of claims 1 to 3, **characterized in that** the side boundary surface portions (201, 202) have a concavely curved side boundary surface portion contour (201', 202') in first vertical section planes, which are section planes parallel to a plane (Y,Z) to which the optical axis (X) is orthogonal and which includes the vertical axis (Z).

5. Illumination device according to any one of claims 1 to 4, **characterized in that** the side boundary surface portions (201, 202) are convexly curved.

6. Illumination device according to one of the claims 1 to 5, **characterized in that** the central coupling surfaces (103, 104) are formed straight in vertical direction (Z, R), so that in second vertical sectional planes, i.e. sectional planes running parallel to a plane (X, Z) spanned by the optical axis (X) and the vertical axis (Z), straight central coupling surface contours (103', 104') are obtained, which preferably run parallel to the common central edge (110).

7. Illumination device according to any one of claims 1 to 6, **characterized in that** each of the connecting coupling surfaces (101, 102) is divided into two sub-connecting coupling surfaces (101a, 101b, 102a, 102b) by a respective connecting edge (120, 130), wherein, for example, the connecting edges (120, 130) extend in the same direction as the central edge (110) when viewed in the vertical direction.

8. Illumination device according to claim 7, **characterized in that** the connecting edges (120, 130) are concavely curved in second vertical section planes (X,Z).

9. Illumination device according to any one of claims 1 to 8, **characterized in that** the light coupling region (10) and/or the optical body (2) is symmetrical with respect to a plane (X,Y) spanned by the optical axis (X) and a horizontal axis (Y) and/or with respect to the vertical section plane (X,Z) spanned by the optical axis (X) and the vertical axis (Z).

10. Illumination device according to any one of claims 7 to 9, **characterized in that** the central edge (110) adjoins a connecting edge (120, 130) at a connection point (P1, P2), and wherein preferably one focal point (F1, F2) in each case lies on a focal point straight line (FG1, FG2), wherein a focal point straight line (FG1, FG2) runs through a connection point (P1, P2) and parallel to the optical axis (X), wherein, for example, the first focal point (F1) has the same distance (a1) to its connection point (P1) as the second focal point (F2) has a distance (a2) to its connection point (P2).

11. Illumination device according to one of the claims 1 to 10, **characterized in that** the light coupling area (10) is connected to the light emitting area (11) via a lateral surface (500), wherein, for example, the lateral surface (500) is formed straight in the vertical direction (R) in areas (503, 504) adjacent to the side boundary surface connecting sections (203, 204).

12. Illumination device according to any one of claims 1 to 11, **characterized in that** the light sources (30, 40) each comprise at least one light emitting diode or consist of one light emitting diode.

13. Illumination device according to one of claims 1 to 12, **characterized in that** each light source (30, 40) has a main radiation direction, wherein, for example, the main radiation directions of the light sources (30, 40) run parallel to the optical axis (X) of the optical body (2).

14. Illumination device according to any one of claims 1 to 13, wherein the illumination device is designed as a motor vehicle headlamp or rear lamp of a motor vehicle or signal lamp for a motor vehicle.

15. Illumination system (800) comprising a lighting device according to any one of claims 1 to 14, and a light guide body (700) into which light can be coupled from the optical body (2) of the lighting device (1) and which emerges from the light guide body (700) via a light guide optic exit surface (701) to form one, two or more light distributions, wherein, for example, the light guide optics exit surface (701) has cylindrical lenses (702) which preferably extend in the direction of a vertical axis (Z1) of the light guide body (700).

16. Illumination system according to claim 15, **characterized in that** an optical axis (X1) of the light guide body (700) and the optical axis (X) of the optical body (2) of the illumination device (1) do not coincide, and in particular are rotated relative to each other by an angle.

17. Illumination system according to claim 15 or 16, **characterized in that**, viewed in a projection in a vertical plane, the vertical axis (Z) of the optical body (2) and the vertical axis (Z1) of the light guide body (700) run parallel or not parallel to one another.

18. Illumination system according to any one of claims 15 to 17, wherein the illumination system is designed as a motor vehicle headlight or rear light of a motor vehicle or signal light for a motor vehicle.

19. Device comprising at least one illumination device (1) according to any one of claims 1 to 14 and/or comprising at least one lighting system (800) according to any one of claims 15 to 18 wherein the device is a motor vehicle headlight or a rear light for a motor vehicle or a signal light for a motor vehicle.

## Revendications

1. Dispositif d'éclairage (1) pour un projecteur de véhicule automobile et/ou pour un feu arrière d'un véhicule automobile et/ou pour un feu de signalisation pour une carte grise, destiné à produire
d'au moins deux, en particulier exactement deux répartitions de lumière, ou pour générer au moins deux, en particulier exactement deux fonctions d'éclairage différentes,
le dispositif d'éclairage (1) comprenant un corps optique (2) ainsi que deux sources lumineuses (30, 40), une première source lumineuse (30) et une deuxième source lumineuse (40), en particulier des sources lumineuses LED, chacune des sources lumineuses (30, 40) pouvant être commandée indépendamment de l'autre ou des autres sources lumineuses,
le corps optique (2) étant formé d'un matériau optiquement transparent,
et dans lequel le corps optique (2) présente une zone d'entrée de lumière (10) et une surface de sortie de lumière (11),
et dans lequel la lumière des sources lumineuses (30, 40), qui est injectée dans le corps optique (2) via la zone de couplage de lumière (10), sort au moins partiellement via la surface de sortie de lumière (11),
la zone de couplage de lumière (10) étant formée d'une surface de couplage de lumière centrale (100) et d'une surface de couplage latérale (200),
la surface centrale de couplage de lumière (100) étant située en face des sources lumineuses (30, 40),
et la surface de couplage latérale (200) se raccorde à la surface de couplage de lumière centrale (100) de telle sorte qu'un creux est formé dans le corps optique (2), dans ou en face duquel sont disposées les sources lumineuses (30, 40) et dans lequel les sources lumineuses (30, 40) émettent leur lumière,
les deux sources lumineuses (30, 40) étant situées sur une droite (G) qui s'étend dans une direction verticale (R) qui est parallèle à un axe vertical (Z),
et dans lequel, vu dans la direction verticale, la première source lumineuse (30) se trouve au-dessus de la deuxième source lumineuse (40),
et dans lequel la zone de couplage de lumière (10) présente deux foyers (F1, F2), l'une des sources lumineuses (30) étant disposée dans l'un des foyers (F1) et l'autre source lumineuse (40) dans l'autre foyer (F2),
**caractérisé en ce que**
la surface de couplage latérale (200) de la zone de couplage de la lumière (10) est conçue de telle sorte que
- dans une zone qui, dans la direction verticale (R), se trouve au moins partiellement ou complètement au-dessus d'un premier plan horizontal (E1) dans lequel la première source lumineuse (30) est disposée, la surface de délimitation latérale (200) présente une première section de surface de délimitation latérale (201) de forme incurvée, et
- dans une zone qui, dans la direction verticale (R), se trouve au moins partiellement ou complètement en dessous d'un deuxième plan horizontal (E2) dans lequel la deuxième source de lumière (40) est disposée, la surface de délimitation latérale (200) présente une deuxième section de surface de délimitation latérale (202) de forme incurvée,
- les plans horizontaux (F1, E2) étant des plans parallèles à un plan (X, Y) auquel l'axe vertical (Z) est orthogonal et qui contient l'axe optique (X), et dans lequel
- les deux parties de surface de délimitation latérale (201, 202) sont reliées l'une à l'autre par des parties de connexion de surface de délimitation latérale (203, 204),
- et la surface centrale de couplage de lumière (10) est réalisée comme suit :
o en partant de chaque section de liaison de surface de délimitation latérale (203, 204), une surface de couplage centrale (103, 104) s'étend respectivement en direction de l'autre section de liaison de surface de délimitation latérale (204, 203), les surfaces de couplage centrales (103, 104) convergeant l'une vers l'autre et débouchant sur un bord central commun (110) ;
o au-dessus et au-dessous des surfaces d'accouplement centrales (103, 104) s'étendent deux surfaces d'accouplement de liaison (101, 102) qui relient les surfaces d'accouplement centrales (103, 104) aux parties de surface de délimitation latérale (201, 202),
o et dans lequel les surfaces d'accouplement centrales (103, 104) sont courbées de manière concave dans des plans de coupe horizontaux, qui sont des plans de coupe parallèles à un plan (X, Y) auquel l'axe vertical (Z) est orthogonal et qui contient l'axe optique (X), de sorte qu'il en résulte des contours concaves de surfaces d'accouplement centrales (103", 104").

2. Dispositif d'éclairage selon la revendication 1, **caractérisé en ce que** les parties de connexion de surface de limitation latérale (203, 204) présentent un contour de partie de connexion rectiligne (203', 204') dans des premiers plans de coupe verticaux, qui sont des plans de coupe parallèles à un plan (Y, Z) auquel l'axe optique (X) est orthogonal et qui contient l'axe vertical (Z).

3. Dispositif d'éclairage selon la revendication 1 ou 2, **caractérisé en ce que** les parties de connexion de surface de délimitation latérale (203, 204) ont un contour de partie de connexion convexe (203", 204") dans des plans de coupe horizontaux, qui sont des plans de coupe parallèles à un plan (X, Y) auquel l'axe vertical (Z) est orthogonal et qui contient l'axe optique (X).

4. Dispositif d'éclairage selon l'une des revendications 1 à 3, **caractérisé en ce que** les portions de surface de délimitation latérale (201, 202) présentent un contour de portion de surface de délimitation latérale (201', 202') à courbure concave dans des premiers plans de coupe verticaux, qui sont des plans de coupe parallèles à un plan (Y, Z) auquel l'axe optique (X) est orthogonal et qui contient l'axe vertical (Z).

5. Dispositif d'éclairage selon l'une quelconque des revendications 1 à 4, **caractérisé en ce que** les portions de surface de délimitation latérale (201, 202) sont incurvées de manière convexe.

6. Dispositif d'éclairage selon l'une des revendications 1 à 5, **caractérisé en ce que** les surfaces d'accouplement centrales (103, 104) sont droites dans la direction verticale (Z, R), de sorte que dans des deuxièmes plans de coupe verticaux, c'est-à-dire des plans de coupe parallèles à un plan (X, Z) défini par l'axe optique (X) et l'axe vertical (Z), on obtient des contours de surfaces d'accouplement centrales (103', 104') droits, de préférence parallèles à l'arête centrale commune (110).

7. Dispositif d'éclairage selon l'une des revendications 1 à 6, **caractérisé en ce que** chacune des surfaces de couplage de liaison (101, 102) est divisée en deux sous-surfaces de couplage de liaison (101a, 101b, 102a, 102b) par un bord de liaison respectif (120, 130), les bords de liaison (120, 130) s'étendant par exemple dans la même direction que le bord central (110), vu dans la direction verticale.

8. Dispositif d'éclairage selon la revendication 7, **caractérisé en ce que** les arêtes de liaison (120, 130) sont concaves dans des deuxièmes plans de coupe verticaux (X, Z).

9. Dispositif d'éclairage selon l'une des revendications 1 à 8, **caractérisé en ce que** la zone d'injection de lumière (10) et/ou le corps optique (2) sont symétriques par rapport à un plan (X, Y) défini par l'axe optique (X) et un axe horizontal (Y) et/ou par rapport au plan de coupe vertical (X, Z) défini par l'axe optique (X) et l'axe vertical (Z).

10. Dispositif d'éclairage selon l'une des revendications 7 à 9, **caractérisé en ce que** l'arête centrale (110) se raccorde à une arête de liaison (120, 130) en un point de raccordement (P1, P2), et dans lequel, de préférence, un point focal (F1, F2) se trouve respectivement sur une droite focale (FG1, FG2), une droite de foyer (FG1, FG2) passant par un point de raccordement (P1, P2) et s'étendant parallèlement à l'axe optique (X), le premier foyer (F1) présentant par exemple la même distance (a1) par rapport à son point de raccordement (P1) que le deuxième foyer (F2) a une distance (a2) par rapport à son point de raccordement (P2).

11. Dispositif d'éclairage selon l'une des revendications 1 à 10, **caractérisé en ce que** la zone d'injection de lumière (10) est reliée à la surface de sortie de lumière (11) par une surface d'enveloppe (500), la surface d'enveloppe (500) étant par exemple droite dans la direction verticale (R) dans des zones (503, 504) adjacentes aux parties de liaison de la surface de délimitation latérale (203, 204).

12. Dispositif d'éclairage selon l'une des revendications 1 à 11, **caractérisé en ce que** les sources lumineuses (30, 40) comprennent chacune au moins une diode électroluminescente ou sont constituées d'une diode électroluminescente.

13. Dispositif d'éclairage selon l'une des revendications 1 à 12, **caractérisé en ce que** chaque source lumineuse (30, 40) présente une direction principale d'émission, les directions principales d'émission des sources lumineuses (30, 40) étant par exemple parallèles à l'axe optique (X) du corps optique (2).

14. Dispositif d'éclairage selon l'une quelconque des revendications 1 à 13, dans lequel le dispositif d'éclairage est configuré comme un projecteur de véhicule automobile ou un feu arrière de véhicule automobile ou un feu de signalisation pour un véhicule automobile.

15. Système d'éclairage (800) comprenant un dispositif d'éclairage selon l'une des revendications 1 à 14, ainsi qu'un corps de guidage de lumière (700) dans lequel de la lumière peut être couplée à partir du corps optique (2) du dispositif d'éclairage (1), et qui sort du corps de guidage de lumière (700) par une surface de sortie optique de guidage de lumière (701) pour former une, deux ou plusieurs répartitions de lumière, la surface de sortie optique de guidage de lumière (701) présentant par exemple des lentilles cylindriques (702) qui s'étendent de préférence dans la direction d'un axe vertical (Z1) du corps de guidage de lumière (700).

16. Système d'éclairage selon la revendication 15, **caractérisé en ce qu'**un axe optique (X1) du corps de guidage de lumière (700) et l'axe optique (X) du corps optique (2) du dispositif d'éclairage (1) ne coïncident pas, et sont notamment tournés d'un angle l'un par rapport à l'autre.

17. Système d'éclairage selon la revendication 15 ou 16, **caractérisé en ce que**, vu en projection dans un plan vertical, l'axe vertical (Z) du corps optique (2) et l'axe vertical (Z1) du corps de guidage de lumière (700) sont parallèles ou non.

18. Système d'éclairage selon l'une quelconque des revendications 15 à 17, dans lequel le système d'éclairage est configuré comme un projecteur de véhicule automobile ou un feu arrière de véhicule automobile ou un feu de signalisation pour un véhicule automobile.

19. Dispositif comprenant au moins un dispositif d'éclairage (1) selon l'une des revendications 1 à 14 et/ou comprenant au moins un système d'éclairage (800) selon l'une des revendications 15 à 18, le dispositif étant un projecteur de véhicule automobile ou un feu arrière pour un véhicule automobile ou un feu de signalisation pour un véhicule automobile.
